# EUROPEAN PATENT SPECIFICATION

(11) **EP 4 117 354 B1**
(45) Date of publication and mention of the grant of the patent: **08.04.2026**
(21) Application number: 21784073.5
(22) Date of filing: 01.02.2021
(51) Int. Cl.: H04W 56/00, H04J 3/06, H04W 28/00, H04W 52/00, H04L 7/00

(54) **METHOD AND APPARATUS FOR PROCESSING TIME SYNCHRONIZATION MESSAGE**
VERFAHREN UND VORRICHTUNG ZUR VERARBEITUNG EINER ZEITSYNCHRONISATIONSNACHRICHT
PROCÉDÉ ET APPAREIL DE TRAITEMENT DE MESSAGE DE SYNCHRONISATION TEMPORELLE

(30) Priority: 09.04.2020 CN 202010276198
(43) Date of publication of application: 11.01.2023
(73) Proprietor: Huawei Technologies Co., Ltd., Longgang Shenzhen, Guangdong 518129 (CN)
(72) Inventor: QIANG, Li, Shenzhen, Guangdong 518129 (CN); YU, Fang, Shenzhen, Guangdong 518129 (CN); LI, Yongcui, Shenzhen, Guangdong 518129 (CN)
(74) Representative: Gill Jennings & Every LLP
(86) International application number: PCT/CN2021/074633
(87) International publication number: WO 2021/203814

(56) References cited:
- EP-A1- 3 609 248
- EP-A1- 3 836 639
- EP-A1- 3 941 109
- EP-A1- 4 009 549
- EP-A1- 4 009 550
- WO-A1-2020/063420
- WO-A2-2016/018188
- CN-A- 105 684 531
- CN-A- 110 636 547
- CN-A- 110 831 144
- CN-A- 111 464 473
- CN-A- 111 490 842
- US-A1- 2014 085 136
- "3rd Generation Partnership Project; Technical Specification Group Services and System Aspects; Study on enhanced support of Industrial Internet of Things (IIoT) in 5G System (Release 17)", no. V0.3.0, 28 January 2020 (2020-01-28), pages 1 - 33, XP051860852, Retrieved from the Internet <URL:ftp://ftp.3gpp.org/Specs/archive/23_series/23.700-20/23700-20-030.zip 23700-20-v030-rm.docx> [retrieved on 20200128]
- "3rd Generation Partnership Project; Technical Specification Group Services and System Aspects; Procedures for the 5G System; Stage 2 (Release 16)", 19 December 2019 (2019-12-19), XP051867065, Retrieved from the Internet <URL:https://ftp.3gpp.org/tsg_sa/WG2_Arch/Latest_SA2_Specs/DRAFT_INTERIM/Archive/23502-g30_CRs_Implemented.zip 23502-g30CRs_Implemented.doc> [retrieved on 20191219]
- TENCENT: "AF Requested TSN Synchronization Activation and Deactivation", 3GPP DRAFT; S2-2001662, vol. SA WG2, 20 January 2020 (2020-01-20), Incheon South Korea, pages 1 - 4, XP051844733

## Description

### TECHNICAL FIELD

This application relates to the communications field, and more specifically, to a method and an apparatus for processing a time synchronization packet.

### BACKGROUND

Time synchronization is a basis for implementing communication reliability and accuracy. In a current known technology, two communication parties perform time synchronization based on a packet (that is, a time synchronization packet) carrying information of a same clock source, for example, a grant master (Grant Master, GM) clock source.

With development of communications technologies, communications services are diversified, and different services have different requirements on time synchronization precision. Therefore, in the known technology, a communications device (for example, a terminal device) has a capability of performing time synchronization based on a plurality of clock sources and a plurality of latency sensitive network (Time Sensitive Network, TSN) clock sources with different precision, so that different clock sources can be used for synchronization based on different service requirements.

In this case, the communications device needs to maintain a time synchronization packet of each clock source. This increases power consumption of the communications device, and affects performance of the communications device.

EP3609248A1 discloses a communication method configured such that a time synchronization service can be provided for a specific communications device. EP3836639A1 discloses a method for determining a synchronization cycle.

Relevant prior art is the document Tencent: "AF Requested TSN Synchronization Activation and Deactivation", 3GPP Draft; S2-2001662, vol. SA WG2, 20 January 2020 (2020-01-20), pages 1-4, Incheon South Korea. This document discloses activation and deactivation of TSN Synchronization.

Further relevant prior art under Art. 54(3) EPC are the documents EP 4 009 549 A1 (TENCENT TECH SHENZHEN CO LTD [CN]) 8 June 2022 (2022-06-08) and EP 4 009 550 A1 (TENCENT TECH SHENZHEN CO LTD [CN]) 8 June 2022 (2022-06-08).

### SUMMARY

This application provides a method and an apparatus for processing a time synchronization packet, to reduce power consumption of a communications device, and improve performance of the communications device while ensuring a service requirement on time synchronization precision. The invention is defined by the independent claims. Preferred embodiments are defined by the dependant claims.

According to a first aspect, as set out in appended claim 1, a method for processing a time synchronization packet is provided, including: A terminal device receives a time synchronization packet of a first clock source from an external device; receiving first indication information from a network device, where the first indication information indicates the terminal device to enter a time synchronization deactivated state of the first clock source; and processing the time synchronization packet of the first clock source based on the first indication information.

Alternatively, in an unclaimed embodiment, the first indication information indicates the terminal device to enter a time synchronization activated state of the first clock source.

The first processing manner is different from the second processing manner. In the first processing manner, the terminal device processes the clock synchronization packet of the first clock source in the time synchronization activated state of the first clock source. In the second processing manner, the terminal device processes the clock synchronization packet of the first clock source in the time synchronization deactivated state of the first clock source.

According to the solution provided in this application, when a clock source is activated and deactivated, the terminal device processes a time synchronization packet of the clock source in different manners, and signaling indicates whether the clock source is activated or deactivated. This can allow the terminal device to perform processing in different manners. For example, in the deactivated state, the terminal device does not need to perform processing that needs to be performed in the activated state. This can reduce power consumption of a communications device, and improve performance of the communications device while ensuring a service requirement on time synchronization precision.

In this application, "the first indication information indicates the terminal device to enter a time synchronization activated (activation) state of the first clock source" may be understood as follows: The first indication information indicates the terminal device to activate (activate) the first clock source, the first indication information indicates the terminal device to activate time synchronization for the first clock source, the first indication information indicates the terminal device to enable (enable) a time synchronization capability for the first clock source, or the first indication information includes an activation request (activation request) for the first clock source.

In addition, "the first indication information indicates the terminal device to enter a time synchronization deactivated (deactivation) state" may be understood as follows: The first indication information indicates the terminal device to deactivate (deactivate) the first clock source, the first indication information indicates the terminal device to deactivate time synchronization for the first clock source, the first indication information indicates the terminal device to disable (disable) a time synchronization capability for the first clock source, or the first indication information includes a deactivation request (deactivation request) for the first clock source.

For example, when the first indication information indicates to enter the activated state, the processing the time synchronization packet of the first clock source based on the first indication information includes: keeping time synchronization of the first clock source based on the first indication information, updating information carried in the time synchronization packet of the first clock source, and forwarding the time synchronization packet of the first clock source to a user plane function UPF entity.

In an unclaimed example, when the first indication information indicates to enter the deactivated state, the processing the time synchronization packet of the first clock source based on the first indication information includes: discarding the time synchronization packet of the first clock source.

When the first indication information indicates to enter the deactivated state, the method may further include: stopping, based on the first indication information, performing time synchronization based on the time synchronization packet of the first clock source.

When the first indication information indicates to enter the deactivated state, the processing the time synchronization packet of the first clock source based on the first indication information includes: transparently transmitting the time synchronization packet of the first clock source.

Herein, the "transparently transmitting" may be understood as that when receiving the time synchronization packet of the first clock source, the terminal device does not update time information carried in the time synchronization packet, but directly sends the time synchronization packet of the first clock source to a next-hop device.

For another example, when the first indication information indicates to enter the activated state, the processing the time synchronization packet of the first clock source based on the first indication information includes: establishing a first quality of service flow QoS flow based on the first indication information. The first QoS flow is used for transmitting the time synchronization packet of the first clock source.

In an unclaimed example, when the first indication information indicates to enter the deactivated state, the processing the time synchronization packet of the first clock source based on the first indication information includes: tearing down the first QoS flow based on the first indication information. The first QoS flow is used for transmitting the time synchronization packet of the first clock source.

The "tearing down" may also be understood as clearing, releasing, or deleting.

In this application, the foregoing processing manner in the activated state or the deactivated state may be specified by a communications system or a communications protocol.

Alternatively, the foregoing processing manner in the activated state or the deactivated state may be set on the terminal device by a device manufacturer or an operator.

Therefore, the foregoing processing manner in the activated state or the deactivated state does not need to be indicated by the network device. This can reduce signaling overheads.

Optionally, when the first indication information indicates to enter the activated state, the first indication information further indicates the first processing manner, and the first processing manner includes at least one of the following processing manners:
Manner a: Update the information carried in the time synchronization packet of the first clock source, and send an updated time synchronization packet of the first clock source to the UPF.
Manner b: Establish the first quality of service flow QoS flow. The first QoS flow is used for transmitting the time synchronization packet of the first clock source.

When the first indication information indicates to enter the deactivated state, the first indication information further indicates the second processing manner, and the second processing manner includes at least one of the following processing manners:
Manner c: Transparently transmit the time synchronization packet of the first clock source.
Manner d: Discard the time synchronization packet of the first clock source.
Manner e: Tear down the first QoS flow. The first QoS flow is used for transmitting the time synchronization packet of the first clock source.
Manner c) is according to the independent claims; manner d) and manner e) do not fall under the scope of protection.

In this application, the processing manner in the activated state or the deactivated state may be indicated by the network device. This can reduce storage overheads of the terminal device caused by storing the processing manner.

Optionally, the first indication information includes an identifier of the first clock source.

In this application, the first clock source includes a clock source of an external system.

The external system may be understood as a system other than a communications system on which the terminal device currently camps.

For example, the first clock source includes a latency sensitive network TSN clock source.

It should be understood that the foregoing first clock source is merely an example for description, and this is not particularly limited in this application. A clock source of another system falls within the protection scope of this application.

Optionally, the time synchronization packet of the first clock source includes a generic precision time protocol gPTP packet.

Optionally, the time synchronization packet of the first clock source includes a precision time protocol PTP packet.

It should be noted that the time synchronization packet may be appropriately changed according to a system to which this application is applied. This is not particularly limited in this application.

Optionally, the first indication information includes an identifier of the terminal device, the identifier of the first clock source, and a first identifier. The first identifier indicates the activated state, or the first identifier indicates the deactivated state.

The first identifier may correspond to a preset field or domain in the first indication information.

In addition, the first identifier (Indication) may include two optional values, for example, on (on) and off (off). One value (for example, on) corresponds to an activated state, and the other value (for example, off) corresponds to a deactivated state. Therefore, the terminal device may determine to enter the activated state or the deactivated state based on the first identifier.

By way of example, and not limitation, the identifier of the terminal device may include but is not limited to a mobile phone number of the terminal device, a device identifier of the terminal device, an internet protocol address of the terminal device, and the like.

Optionally, the first indication information includes a port number of a first port, and the first port includes a port configured to transmit the time synchronization packet of the first clock source.

By way of example, and not limitation, the first port may include all ports corresponding to the terminal device.

Alternatively, the first port may include a part or all of a plurality of ports configured to transmit the time synchronization packet of the first clock source.

Optionally, the first indication information includes an identifier of a first application service entity. The first application service entity is configured to provide a first service for the terminal device, and the first service is based on time synchronization of the first clock source.

Optionally, if the first indication information indicates to enter the activated state, the method further includes: keeping time synchronization of the first clock source based on the first indication information.

Optionally, if the first indication information indicates to enter the deactivated state, the method further includes: stopping time synchronization of the first clock source based on the first indication information.

According to a second aspect, as set out in appended claim 6, a method for processing a time synchronization packet is provided, including: A network device generates first indication information, where the first indication information indicates the terminal device to enter a time synchronization deactivated state of the first clock source, and the first clock source includes a clock source of an external system; and sending the first indication information.

Alternatively, in an unclaimed embodiment, the first indication information indicates the terminal device to enter a time synchronization activated state of the first clock source.

The first processing manner is different from the second processing manner. In the first processing manner, the terminal device processes the clock synchronization packet of the first clock source in the time synchronization activated state of the first clock source. In the second processing manner, the terminal device processes the clock synchronization packet of the first clock source in the time synchronization deactivated state of the first clock source.

According to the solution provided in this application, when a clock source is activated and deactivated, the terminal device processes a time synchronization packet of the clock source in different manners, and signaling indicates whether the clock source is activated or deactivated. This can allow the terminal device to perform processing in different manners. For example, in the deactivated state, the terminal device does not need to perform processing that needs to be performed in the activated state. Therefore, this can reduce power consumption of a communications device, and improve performance of the communications device while ensuring a service requirement on time synchronization precision.

Optionally, the first indication information includes an identifier of the terminal device, an identifier of the first clock source, and a first identifier. The first identifier indicates the activated state, or the first identifier indicates the deactivated state.

The first identifier may correspond to a preset field or domain in the first indication information.

In addition, the first identifier (Indication) may include two optional values, for example, on (on) and off (off). One value (for example, on) corresponds to an activated state, and the other value (for example, off) corresponds to a deactivated state. Therefore, the terminal device may determine to enter the activated state or the deactivated state based on the first identifier.

By way of example, and not limitation, the identifier of the terminal device may include but is not limited to a mobile phone number of the terminal device, a device identifier of the terminal device, an internet protocol address of the terminal device, and the like.

Optionally, the first indication information includes a port number of a first port, and the first port includes a port configured to transmit a time synchronization packet of the first clock source.

By way of example, and not limitation, the first port may include all ports corresponding to the terminal device.

Alternatively, the first port may include a part or all of a plurality of ports configured to transmit the time synchronization packet of the first clock source.

Optionally, the first indication information includes an identifier of a first application service entity. The first application service entity is configured to provide a first service for the terminal device, and the first service is based on time synchronization of the first clock source.

Optionally, when the first indication information indicates to enter the activated state,
the first indication information indicates the terminal device to update information carried in the time synchronization packet of the first clock source, and forward the time synchronization packet of the first clock source to a user plane function UPF entity; or
the first indication information indicates the terminal device to establish a first quality of service flow QoS flow. The first QoS flow is used for transmitting the time synchronization packet of the first clock source.

Optionally, when the first indication information indicates to enter the deactivated state,
the first indication information indicates the terminal device to discard the time synchronization packet of the first clock source;
the first indication information indicates the terminal device to transparently transmit the time synchronization packet of the first clock source; or
the first indication information indicates the terminal device to tear down the first QoS flow. The first QoS flow is used for transmitting the time synchronization packet of the first clock source.

Optionally, the first clock source includes a latency sensitive network TSN clock source.

Optionally, the time synchronization packet of the first clock source includes a generic precision time protocol gPTP packet.

Optionally, the method further includes: recording the activated state of the first clock source in the terminal device. The activated state includes activation or deactivation.

Optionally, the method further includes: receiving second indication information, where the second indication information requests to activate the first clock source in the terminal device, or the second indication information requests to deactivate the first clock source in the terminal device.

That a network device generates first indication information includes:
generating the first indication information based on the second indication information.

Optionally, the generating the first indication information based on the second indication information includes:
generating the first indication information based on the second indication information and the activated state of the first clock source in the terminal device. The activated state includes activation or deactivation.

For example, if the second indication information requests to activate the first clock source in the terminal device, and the activated state of the first clock source in the terminal device is deactivated, the first indication information is generated. The first indication information indicates the terminal device to enter the time synchronization activated state of the first clock source.

For another example, if the second indication information requests to activate the first clock source in the terminal device, and the second indication information is first information that is received by the network device and that requests to activate synchronization for the first clock source in the terminal device, the first indication information is generated. The first indication information indicates the terminal device to enter the time synchronization activated state of the first clock source.

For another example, if the second indication information requests to deactivate the first clock source in the terminal device, and the activated state of the first clock source in the terminal device is activated, the first indication information is generated. The first indication information indicates the terminal device to enter the time synchronization deactivated state of the first clock source.

For another example, if the second indication information requests to deactivate the first clock source in the terminal device, the activated state of the first clock source in the terminal device is activated, and no AF other than an AF that sends the second indication information provides a service for the terminal device based on the first clock source, the first indication information is generated. The first indication information indicates the terminal device to enter the time synchronization deactivated state of the first clock source.

Optionally, the method further includes: receiving the second indication information, where the second indication information requests to activate time synchronization of the first clock source of the terminal device, or the second indication information requests to deactivate time synchronization of the first clock source of the terminal device; and
processing the first QoS flow based on the second indication information, where the first QoS flow is for the first terminal device to transmit the time synchronization packet of the first clock source.

For example, when the second indication information requests to activate time synchronization of the first clock source of the terminal device, the first QoS flow is established based on the second indication information. The first QoS flow is for the first terminal device to transmit the time synchronization packet of the first clock source.

For another example, when the second indication information requests to deactivate time synchronization of the first clock source of the terminal device, the first QoS flow is torn down based on the second indication information.

Optionally, the processing the first QoS flow based on the second indication information includes: processing the first QoS flow based on the second indication information and a status of the first clock source in the first terminal device.

For example, if the second indication information is first information that is received by the network device and that requests to activate time synchronization of the first clock source of the terminal device, the first QoS flow is established. The first QoS flow is for the first terminal device to transmit the time synchronization packet of the first clock source.

Alternatively, if the second indication information requests to activate time synchronization of the first clock source of the terminal device, and the first clock source in the terminal device is in the deactivated state, the first QoS flow is established.

For another example, if the second indication information requests to deactivate time synchronization of the first clock source of the terminal device, and an application service AF entity that sends the second indication information is a last AF that provides a service for the terminal device based on the first clock source, the first QoS flow is torn down.

Alternatively, if the second indication information requests to deactivate time synchronization of the first clock source of the terminal device, and no AF other than an AF that sends the second indication information provides a service for the terminal device based on the first clock source, the first QoS flow is torn down.

Optionally, that a network device generates first indication information includes: The network device generates the first indication information based on the second indication information.

Optionally, that the network device generates the first indication information based on the second indication information includes: The network device generates the first indication information based on the second indication information and the status of the first clock source in the first terminal device.

Optionally, that the network device generates the first indication information based on the second indication information and the status of the first clock source in the first terminal device includes:
if the second indication information is first information that is received by the network device and that requests to activate time synchronization of the first clock source of the terminal device, generating the first indication information that indicates the terminal device to enter the time synchronization activated state of the first clock source.

Optionally, that the network device generates the first indication information based on the second indication information and the status of the first clock source in the first terminal device includes:
if the second indication information requests to deactivate time synchronization of the first clock source of the terminal device, and the application service AF entity that sends the second indication information is the last AF that provides the service for the terminal device based on the first clock source, generating the first indication information that indicates the terminal device to enter the time synchronization deactivated state of the first clock source.

Optionally, the second indication information includes the identifier of the terminal device, the identifier of the first clock source, and a second identifier. The second identifier indicates the activation, or the second identifier indicates the deactivation.

The second identifier may correspond to a preset field or domain in the second indication information.

In addition, the second identifier (Indication) may include two optional values, for example, on (on) and off (off). One value (for example, on) corresponds to activation, and the other value (for example, off) corresponds to deactivation. Therefore, the network device may determine to perform activation or deactivation based on the second identifier. Optionally, the second indication information is sent by the first application service entity, and the second indication information includes the identifier of the first application service entity.

Optionally, the network device includes a session management function (Session Management Function, SMF) entity.

Optionally, the network device includes a network exposure function (Network Exposure Function, NEF) entity.

Optionally, the network device includes an access management function (access and mobility management function, AMF) entity.

Optionally, the network device includes a policy control function (Policy Control Function, PCF) entity.

According to a third aspect, a time synchronization method is provided, including: A terminal device receives first indication information, where first indication information indicates a manner of processing a time synchronization packet for a first clock source; and
processing the time synchronization packet of the first clock source based on the first indication information.

Optionally, the processing manner includes at least one of the following processing manners. Manner a: Update information carried in the time synchronization packet of the first clock source, and send an updated time synchronization packet of the first clock source to a UPF.

Manner b: Establish a first quality of service flow QoS flow. The first QoS flow is used for transmitting the time synchronization packet of the first clock source.

Manner c: Transparently transmit the time synchronization packet of the first clock source.

Manner d: Discard the time synchronization packet of the first clock source.

Manner e: Tear down the first QoS flow. The first QoS flow is used for transmitting the time synchronization packet of the first clock source.

Manner f: Keep time synchronization of the first clock source.

Manner g: Stop time synchronization of the first clock source.

According to the solution provided in this application, a network device configures a manner of processing a time packet of a clock source for the terminal device, so that the manner of processing the time synchronization packet by the terminal device can be flexibly adjusted based on an actual use status. This can reduce power consumption of a communications device, and improve performance of the communications device while ensuring a service requirement on time synchronization precision.

Optionally, the first indication information includes an identifier of the terminal device, an identifier of the first clock source, and a first identifier. The first identifier indicates an activated state, or the first identifier indicates a deactivated state.

The first identifier may correspond to a preset field or domain in the first indication information.

In addition, the first identifier (Indication) may include two optional values, for example, on (on) and off (off). One value (for example, on) corresponds to an activated state, and the other value (for example, off) corresponds to a deactivated state. Therefore, the terminal device may determine to enter the activated state or the deactivated state based on the first identifier.

By way of example, and not limitation, the identifier of the terminal device may include but is not limited to a mobile phone number of the terminal device, a device identifier of the terminal device, an internet protocol address of the terminal device, and the like.

Optionally, the first indication information includes a port number of a first port, and the first port includes a port configured to transmit the time synchronization packet of the first clock source.

By way of example, and not limitation, the first port may include all ports corresponding to the terminal device.

Alternatively, the first port may include a part or all of a plurality of ports configured to transmit the time synchronization packet of the first clock source.

Optionally, the first indication information includes an identifier of a first application service entity. The first application service entity is configured to provide a first service for the terminal device, and the first service is based on time synchronization of the first clock source.

According to a fourth aspect, a time synchronization method is provided, including: A network device sends first indication information. The first indication information indicates a manner of processing a time synchronization packet for a first clock source GM.

Optionally, the processing manner includes at least one of the following processing manners.

Manner a: Update information carried in the time synchronization packet of the first clock source, and send an updated time synchronization packet of the first clock source to a UPF.

Manner b: Establish a first quality of service flow QoS flow. The first QoS flow is used for transmitting the time synchronization packet of the first clock source.

Manner c: Transparently transmit the time synchronization packet of the first clock source.

Manner d: Discard the time synchronization packet of the first clock source.

Manner e: Tear down the first QoS flow. The first QoS flow is used for transmitting the time synchronization packet of the first clock source.

Manner f: Keep time synchronization of the first clock source.

Manner g: Stop time synchronization of the first clock source.

According to the solution provided in this application, the network device configures a manner of processing a time packet of a clock source for a terminal device, so that the manner of processing the time synchronization packet by the terminal device can be flexibly adjusted based on an actual use status. This can reduce power consumption of a communications device, and improve performance of the communications device while ensuring a service requirement on time synchronization precision.

Optionally, the first indication information includes an identifier of the terminal device, an identifier of the first clock source, and a first identifier. The first identifier indicates an activated state, or the first identifier indicates a deactivated state.

The first identifier may correspond to a preset field or domain in the first indication information.

In addition, the first identifier (Indication) may include two optional values, for example, on (on) and off (off). One value (for example, on) corresponds to an activated state, and the other value (for example, off) corresponds to a deactivated state. Therefore, the terminal device may determine to enter the activated state or the deactivated state based on the first identifier.

By way of example, and not limitation, the identifier of the terminal device may include but is not limited to a mobile phone number of the terminal device, a device identifier of the terminal device, an internet protocol address of the terminal device, and the like.

Optionally, the first indication information includes a port number of a first port, and the first port includes a port configured to transmit the time synchronization packet of the first clock source.

By way of example, and not limitation, the first port may include all ports corresponding to the terminal device.

Alternatively, the first port may include a part or all of a plurality of ports configured to transmit the time synchronization packet of the first clock source.

Optionally, the first indication information includes an identifier of a first application service entity. The first application service entity is configured to provide a first service for the terminal device, and the first service is based on time synchronization of the first clock source.

Optionally, the method further includes: recording the activated state of the first clock source in the terminal device. The activated state includes activation or deactivation.

Optionally, the method further includes: receiving second indication information, where the second indication information requests to activate the first clock source in the terminal device, or the second indication information requests to deactivate the first clock source in the terminal device.

That the network device generates the first indication information includes:
generating the first indication information based on the second indication information.

Optionally, the generating the first indication information based on the second indication information includes:
generating the first indication information based on the second indication information and the activated state of the first clock source in the terminal device. The activated state includes activation or deactivation.

For example, if the second indication information requests to activate the first clock source in the terminal device, and the activated state of the first clock source in the terminal device is deactivated, the first indication information is generated. The first indication information indicates at least one of the foregoing processing manners a and b.

For another example, if the second indication information requests to deactivate the first clock source in the terminal device, and the activated state of the first clock source in the terminal device is activated, the first indication information is generated. The first indication information indicates at least one of the foregoing processing manners c, d, and e.

For another example, if the second indication information requests to deactivate the first clock source in the terminal device, the activated state of the first clock source in the terminal device is activated, and no application function entity requests to activate the first clock source in the terminal device, the first indication information is generated. The first indication information indicates at least one of the foregoing processing manners c, d, and e.

Optionally, the method further includes: receiving the second indication information. The second indication information requests to activate time synchronization of the first clock source of the terminal device, or the second indication information requests to deactivate time synchronization of the first clock source of the terminal device.

When the second indication information requests to activate time synchronization of the first clock source of the terminal device, the first QoS flow is established based on the second indication information. The first QoS flow is for the first terminal device to transmit the time synchronization packet of the first clock source.

When the second indication information requests to deactivate time synchronization of the first clock source of the terminal device, the first QoS flow is torn down based on the second indication information.

Optionally, the second indication information includes an identifier of the terminal device, an identifier of the first clock source, and a first identifier. The first identifier indicates an activated state, or the first identifier indicates a deactivated state.

The first identifier may correspond to a preset field or domain in the first indication information.

In addition, the first identifier (Indication) may include two optional values, for example, on (on) and off (off). One value (for example, on) corresponds to an activated state, and the other value (for example, off) corresponds to a deactivated state. Therefore, the terminal device may determine to enter the activated state or the deactivated state based on the first identifier.

Optionally, the second indication information is sent by the first application service entity, and the second indication information includes the identifier of the first application service entity.

Optionally, the network device includes a session management function (Session Management Function, SMF) entity.

Optionally, the network device includes a network exposure function (Network Exposure Function, NEF) entity.

Optionally, the network device includes an access management function (access and mobility management function, AMF) entity.

Optionally, the network device includes a policy control function (Policy Control Function, PCF) entity.

According to a fifth aspect, an apparatus for processing a time synchronization packet is provided. Units in the apparatus are separately configured to perform steps of the communication method according to the first aspect or the third aspect and any implementation of the first aspect or the third aspect.

In a design, the apparatus is a communication chip. The communication chip may include an input circuit or interface configured to send information or data, and an output circuit or interface configured to receive information or data.

In another design, the apparatus is a communications device, and the communications device may include a transmitting device configured to send information or data, and a receiving device configured to receive information or data.

According to a sixth aspect, an apparatus for processing a time synchronization packet is provided. Units in the apparatus are separately configured to perform steps of the communication method according to the second aspect or the fourth aspect and any implementation of the second aspect or the fourth aspect.

In a design, the apparatus is a communication chip. The communication chip may include an input circuit or interface configured to send information or data, and an output circuit or interface configured to receive information or data.

In another design, the apparatus is a communications device, and the communications device may include a transmitting device configured to send information or data, and a receiving device configured to receive information or data.

According to a seventh aspect, a communications device is provided, including a processor and a memory. The memory is configured to store a computer program, and the processor is configured to invoke the computer program from the memory **and** run the computer program, so that the communications device performs the communication method according to any one of the first aspect to the fourth aspect and the implementations of the first aspect to the fourth aspect.

Optionally, there are one or more processors, and there are one or more memories.

Optionally, the memory may be integrated with the processor, or the memory and the processor are separately disposed.

Optionally, the terminal device further includes a transmitting device (a transmitter) and a receiving device (a receiver).

According to an eighth aspect, a communications system is provided, including the communications device provided in the ninth aspect.

In a possible design, the communications system may further include another device that interacts with the communications device in the solutions provided in embodiments of this application.

According to a ninth aspect, a communications system is provided, including the foregoing network device and terminal device.

The terminal device is configured to indicate the method according to the implementations of the first aspect or the third aspect, and the network device is configured to perform the method according to the implementations of the second aspect or the fourth aspect.

In a possible design, the communications system may further include another device that interacts with the network device or the terminal device in the solutions provided in embodiments of this application.

According to a tenth aspect, a computer program product is provided. The computer program product includes a computer program (which may also be referred to as code or instructions). When the computer program is run, a computer is enabled to perform the method according to any one of the first aspect to the fourth aspect and the possible implementations of the first aspect to the fourth aspect.

According to an eleventh aspect, a computer-readable medium is provided. The computer-readable medium stores a computer program (which may also be referred to as code or instructions). When the computer program is run on a computer, the computer is enabled to perform the method according to any one of the first aspect to the fourth aspect and the possible implementations of the first aspect to the fourth aspect.

According to a twelfth aspect, a chip system is provided, including a memory and a processor. The memory is configured to store a computer program, and the processor is configured to invoke the computer program from the memory and run the computer program, to enable a communications device on which the chip system is installed performs the method according to any one of the first aspect to the fourth aspect and the possible implementations of the first aspect to the fourth aspect.

The chip system may include an input circuit or interface configured to send information or data, and an output circuit or interface configured to receive information or data.

### BRIEF DESCRIPTION OF DRAWINGS

FIG. 1 is a schematic diagram of an example of a communications system according to this application;
FIG. 2 is a schematic diagram of another example of a communications system according to this application;
FIG. 3 is a schematic interaction diagram of an example of a method for processing a time synchronization packet according to this application;
FIG. 4 is a schematic interaction diagram of another example of a method for processing a time synchronization packet according to this application;
FIG. 5 is a schematic interaction diagram of still another example of a method for processing a time synchronization packet according to this application;
FIG. 6 is a schematic diagram of an example of an apparatus for processing a time synchronization packet according to this application;
FIG. 7 is a schematic diagram of an example of an apparatus for processing a time synchronization packet according to this application; and
FIG. 8 is a schematic diagram of an example of a terminal device according to this application.

### DESCRIPTION OF EMBODIMENTS

The following describes technical solutions of this application with reference to accompanying drawings.

The technical solutions in embodiments of this application may be applied to various communications systems, for example, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS) system, a future 5th generation (5th generation, 5G) system, or a new radio (new radio, NR) system.

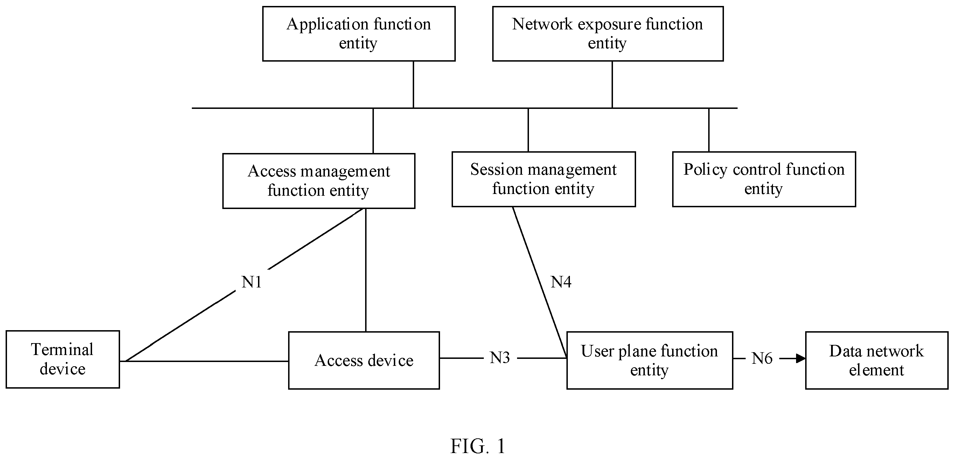

The following describes a structure of a communications system in this application with reference to FIG. 1.

As shown in FIG. 1, the communications system includes but is not limited to the following network elements.

### 1. Terminal device

The terminal device in embodiments of this application may also be referred to as user equipment (user equipment, UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communications device, a user agent, a user apparatus, or the like.

The terminal device may be a device that provides voice/data connectivity for a user, for example, a handheld device or a vehicle-mounted device that has a wireless connection function. Currently, examples of some terminals are a mobile phone (mobile phone), a tablet computer, a laptop computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless telephone set, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a future 5G network, a terminal device in a future evolved public land mobile network (public land mobile network, PLMN), or the like. This is not limited in the embodiments of this application.

By way of example, and not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. Generalized wearable intelligent devices include full-featured and large-size devices that can implement complete or partial functions without depending on smartphones, such as smart watches or smart glasses, and devices that focus on only one type of application and need to work with other devices such as smartphones, such as various smart bands or smart jewelry for monitoring physical signs.

In addition, the terminal device in embodiments of this application may alternatively be a terminal device in an internet of things (internet of things, IoT) system. IoT is an important part of future information technology development. A main technical feature of the IoT is to connect an object to a network by using a communications technology, to implement an intelligent network for human-machine interconnection and thing-thing interconnection.

In embodiments of this application, an IoT technology may implement massive connections, deep coverage, and terminal power saving by using, for example, a narrowband (narrow band) NB technology. For example, the NB may include one resource block (resource block, RB). In other words, a bandwidth of the NB is only 180 KB. To implement massive access, terminals need to be discrete in access. According to a communication method in embodiments of this application, a congestion problem that occurs in the IoT technology when massive terminals access a network by using the NB can be effectively resolved.

In addition, in this embodiment of this application, the terminal device may further communicate with a terminal device in another communications system, for example, communication between devices. For example, the terminal device may further transmit (for example, send and/or receive) a time synchronization packet with a terminal device in another communications system.

### 2. Access device

In addition, the access device in embodiments of this application may be a device configured to communicate with a terminal device. The access device may also be referred to as an access network device or a radio access network device. For example, the access device may be an evolved NodeB (evolved NodeB, eNB or eNodeB) in an LTE system, a radio controller in a cloud radio access network (cloud radio access network, CRAN) scenario, a relay station, an access point, a vehicle-mounted device, a wearable device, an access device in a future 5G network, an access device in a future evolved PLMN network, an access point (access point, AP) in a WLAN, a gNB in a new radio system (new radio, NR) system. This is not limited in this embodiment of this application.

In addition, in this embodiment of this application, the access device is a device in a RAN, in other words, is a RAN node that connects the terminal device to a wireless network. By way of example and not limitation, the access device may be a gNB, a transmission reception point (transmission reception point, TRP), an evolved NodeB (evolved Node B, eNB), a radio network controller (radio network controller, RNC), a NodeB (Node B, NB), a base station controller (base station controller, BSC), a base transceiver station (base transceiver station, BTS), a home base station (for example, a home evolved NodeB or a home Node B. HNB), a baseband unit (base band unit, BBU), or a wireless fidelity (wireless fidelity, Wi-Fi) access point (access point, AP). In a network structure, the network device may include a centralized unit (centralized unit, CU) node, a distributed unit (distributed unit, DU) node, a RAN device including a CU node and a DU node, or a RAN device including a control plane CU node (CU-CP node), a user plane CU node (CU-UP node), and a DU node.

The access device serves a cell. The terminal device communicates with the access device by using a transmission resource (for example, a frequency domain resource or a spectrum resource) used for the cell. The cell may be a cell corresponding to the access device (for example, a base station). The cell may belong to a macro base station, or a base station corresponding to a small cell (small cell). The small cell herein may include a metro cell (metro cell), a micro cell (micro cell), a pico cell (pico cell), a femto cell (femto cell), or the like. These small cells have features of small coverage and a low transmit power, and are suitable for providing a high-rate data transmission service.

In addition, a plurality of cells may simultaneously work in a same frequency band on a carrier in the LTE system or the 5G system. In some special scenarios, it may be considered that a concept of the carrier is equivalent to that of the cell. For example, in a carrier aggregation (carrier aggregation, CA) scenario, both a carrier index of a secondary component carrier and a cell identifier (cell identification, Cell ID) of a secondary cell that works on the secondary component carrier are carried when the secondary component carrier is configured for UE. In this case, it may be considered that the concept of the carrier is equivalent to that of the cell. For example, that the terminal device accesses a carrier is equivalent to that the terminal device accesses a cell.

The communications system in this application may be further applicable to a vehicle to everything (vehicle to everything, V2X) technology. To be specific, the terminal device in this application may alternatively be a vehicle, for example, an intelligent vehicle or a self-driving vehicle.

Herein, "X" in V2X represents different communication targets, and V2X may include but is not limited to vehicle to vehicle (vehicle to vehicle, V2V), vehicle to infrastructure (vehicle to infrastructure, V2I), vehicle to network (vehicle to network, V2N), and vehicle to pedestrian (vehicle to pedestrian, V2P).

In V2X, the access device may configure a "zone (zone)" for UE. The zone may also be referred to as a geographical area. After the zone configuration, the world is divided into a plurality of zones, and the zones are defined by reference points, lengths, and widths. When determining a zone identifier (identifier, ID), the UE uses a zone length, a zone width, a quantity of zones above the length, a quantity of zones above the width, and a zone reference point to perform a remainder operation. The foregoing information may be configured by the access device.

### 3. Access management function entity

The access management function entity is mainly configured to perform mobility management, access management, and the like, and may be configured to implement functions, for example, lawful interception and access authorization/authentication, other than session management in functions of a mobility management entity (mobility management entity, MME) in an LTE system.

In a 5G communications system, the access management network element may be an access management function (access and mobility management function, AMF) entity.

In a future communications system, the access management function entity may still be an AMF entity, or may have another name. This is not limited in this application.

### 4. Session management function entity

The session management function (session management function, SMF) entity is mainly configured to: manage a session, allocate and manage an internet protocol (internet protocol, IP) address of a terminal device, select a termination point of a manageable user plane function, a policy control and charging function interface, notify downlink data, and the like.

In a future communications system, the session management network element may still be an SMF entity, or may have another name. This is not limited in this application.

### 5. Application function entity

The application function (application function, AF) entity is configured to perform application-affected data routing, access a network exposure function entity, interact with a policy framework to perform policy control, or the like.

In a future communications system, the application function entity may still be an AF entity, or may have another name. This is not limited in this application.

### 6. Network exposure function entity

The network exposure function entity (Network Exposure Function, NEF) entity is configured to securely expose various capabilities of the system to the outside for use by a third-party application.

For example, in this application, the NEF may open a time synchronization capability of a communications system (for example, a 5G system), to support application services such as professional audio and video and industrial control.

In a future communications system, the network exposure function entity may still be an NEF entity, or may have another name. This is not limited in this application.

### 7. User plane function entity

The user plane function (user plane function, UPF) entity is configured to perform packet routing and forwarding, quality of service (quality of service, QoS) processing of user plane data, or the like.

In a future communications system, the user plane function entity may still be a UPF entity, or may have another name. This is not limited in this application.

### 8. Data network

The data network (data network, DN) is a network that provides data transmission.

### 9. Policy control function entity

The policy control function (Policy Control Function, PCF) entity supports a unified policy framework to manage network behavior, provides a policy rule for a network entity to execute, and accesses subscription information of a unified data repository (UDR).

It should be noted that the foregoing "entity" may also be referred to as a network element, a device, an apparatus, a module, or the like. This is not particularly limited in this application. In addition, in this application, for ease of understanding and description, the description of the "entity" is omitted in some descriptions. For example, the SMF entity is referred to as an SMF for short. In this case, the "SMF" should be understood as an SMF network element or an SMF entity. Descriptions of same or similar cases are omitted below.

It may be understood that the foregoing entities or functions may be network elements in a hardware device, or may be software functions running on dedicated hardware, or may be virtualized functions instantiated on a platform (for example, a cloud platform).

It should be understood that the foregoing network elements or entities included in the communications system are merely examples for description. This is not particularly limited in this application.

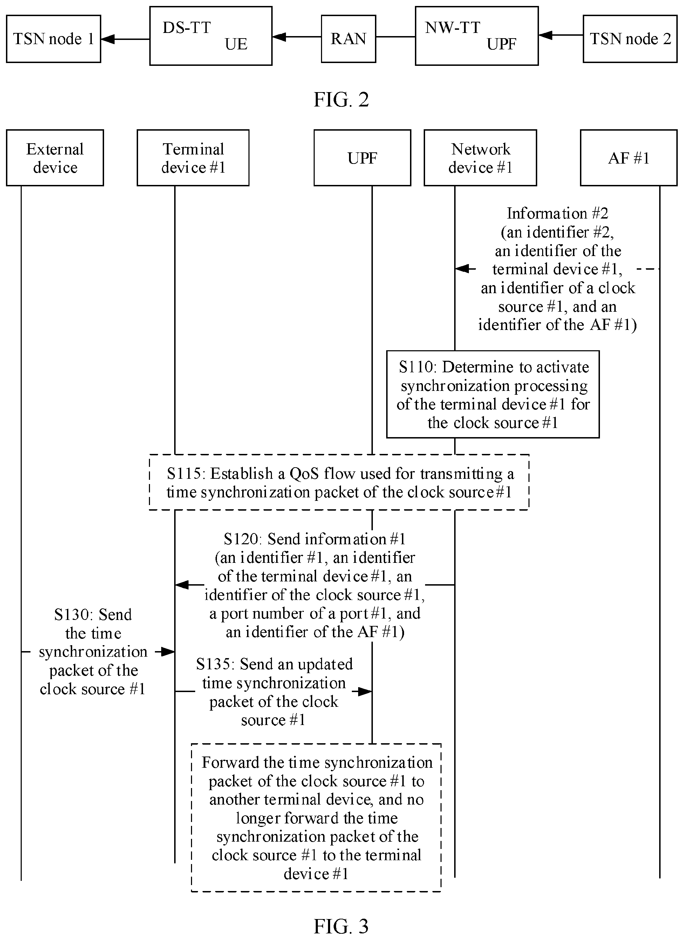

FIG. 2 is a schematic diagram of another example of this application. As shown in FIG. 2, a communications system in this application may support a latency sensitive network (Time Sensitive Network, TSN). Specifically, a TSN system sends time serving information to a TSN node by using the communications system (specifically, the communications system on which a terminal device camps), for example, a 5G system, to implement clock synchronization between TSN nodes in a same time domain. In other words, clock times of all TSN nodes are consistent. In the 5G system, a function module: a device side TSN translator (device side TSN translator, DS-TT) is deployed on a terminal device, and a function module: a network side TSN translator (network side TSN translator, NW-TT) is deployed on a user plane function (user plane function, UPF), to adapt to an external TSN system.

The TSN system sends the time serving information through the TSN node, to implement clock synchronization between the TSN nodes in the same time domain. In other words, the clock times of all the TSN nodes are consistent. In a wireless communications system, a function module: a DS-TT is deployed on a terminal device, and a function module: an NW-TT is deployed on a UPF, to adapt to an external TSN system. As shown in FIG. 2, when the 5G system functions as a TSN bridge (TSN Bridge), the 5G system may be referred to as a 5GS virtual TSN bridge (5GS Virtual TSN Bridge).

A specific structure of an execution body of a method provided in embodiments of this application is not particularly limited in embodiments of this application, provided that a program that records code for the method provided in embodiments of this application can be run to perform communication according to the method provided in embodiments of this application. For example, the execution body of the method provided in embodiments of this application may be a terminal device, a network device, a function module that can invoke and execute the program in a terminal device or a network device, or a component (for example, a chip or a circuit) that may be applied to a terminal device or a network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, a computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, include and/or carry instructions and/or data.

In the communications system in this application, a plurality of time synchronization capabilities (or a plurality of clock sources, for example, GMs) may be provided, to support time synchronization with a variety of precision.

For example, the time synchronization capability may include but is not limited to the following capabilities:
1. A capability of performing synchronization based on an internal clock source (for example, a 5G GM) of a system (for example, a 5G system);
2. A capability of performing synchronization based on a TSN clock source (for example, a TSN GM);
3. A capability of performing synchronization based on a clock source of another possible type in the future.

In addition, there can be a plurality of different clock sources in a same type of time synchronization capability. For example, in a time synchronization type of the TSN, synchronization may be performed based on a TSN clock source 1 (a TSN GM 1) in a clock domain in which a TSN node 1 is located as shown in FIG. 2. Alternatively, synchronization may be performed based on a TSN clock source 2 (a TSN GM 2) in a clock domain in which a TSN node 2 is located as shown in FIG. 2. Different clock sources may have different synchronization precision. For example, precision of the 5G GM may be 0.1 milliseconds (ms), precision of the TSN GM 1 may be 0.001 ms, and precision of the TSN GM 2 may be 0.001 ms.

For example, the solution provided in this application may support a time synchronization capability based on three clock sources of two types, for example, synchronization based on a clock source (the 5G GM) of the 5G system and synchronization based on a TSN master clock source (the TSN GM 1 and the TSN GM 2).

The foregoing three clock sources provide different time synchronization precision, which are exposed to a third-party application through a NEF. Different applications can use one or more time synchronization capabilities based on application requirements.

For example, a video surveillance application may choose to use TSN GM 1-based time synchronization, a production control application may also choose to use TSN GM 1-based time synchronization, and a video conference application may choose to use 5G GM-based time synchronization.

In this application, time information may be carried and transferred between devices (including between devices in a system, or between a device in a system and a device outside the system) by using a time synchronization packet, for example, a generic precision time protocol (generic Precision Time Protocol, gPTP) packet (or a message).

Therefore, all devices in the system, for example, network elements such as UE and a UPF in the 5G system, and UE or a network device outside the 5G system may perform time synchronization based on the time information in the received gPTP packet.

By way of example, and not limitation, the time information may include but is not limited to a sending moment of the time synchronization packet, a time offset, and the like.

It should be understood that the foregoing time information and specific content of the time synchronization packet are merely examples for description. This is not particularly limited in this application. The time synchronization packet in this application may be the same as or similar to a packet used for a time synchronization process in a conventional technology. In addition, the time information in this application may be the same as or similar to information used for time synchronization in the conventional technology, or in other words, information carried in the time synchronization packet in the conventional technology.

In this application, the terminal device has two states for a clock source: an activated state and a deactivated state.

In addition, the terminal device may switch the clock source between the activated state and the deactivated state based on an indication of the network device (for example, an SMF).

In addition, in the two states, the terminal device processes a time synchronization packet of the clock source in different manners.

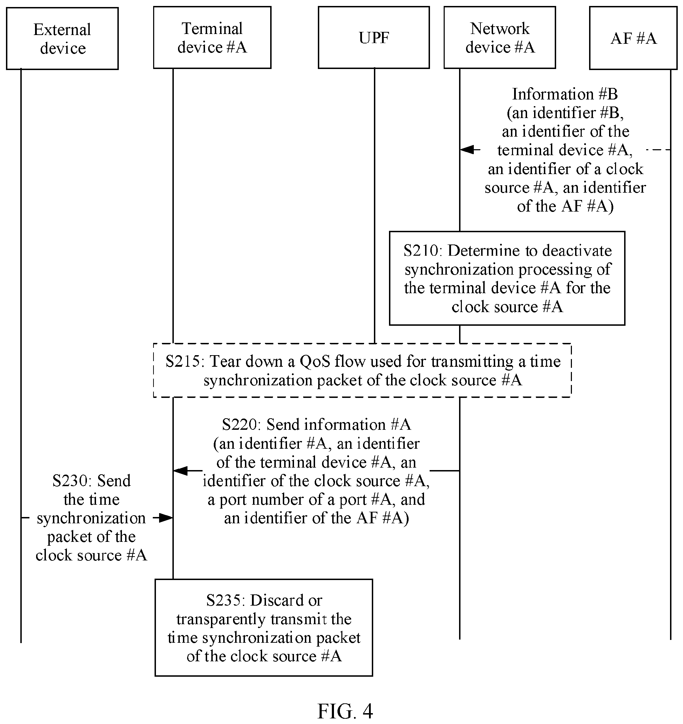

The following separately describes state switching and processing manners in different states in detail with reference to FIG. 3 and FIG. 4.

FIG. 3 shows an activation process and a manner of processing a time synchronization packet in an activated state. As shown in FIG. 3, in S110, a network device #1 (namely, an example of a network device) may determine that a terminal device #1 (namely, an example of a terminal device) needs to be activated to perform a time synchronization process for a TSN GM #1 (namely, an example of a first clock source).

By way of example, and not limitation, the network device #1 may include an SMF.

In this case, the SMF and the terminal device may communicate with each other by using, for example, an AMF and an access network device.

For example, the SMF and the terminal device may communicate with each other by using, for example, a non-access stratum (Non-Access Stratum, NAS) message.

It should be understood that the foregoing SMF is merely an example of the network device #1. This is not particularly limited in this application. For example, the network device #1 may alternatively be an AMF, an access device, or the like. This is not particularly limited in this application. For ease of understanding, the following describes in detail a method for processing the time synchronization packet in this application by using the SMF as the network device #1.

In this case, the network device #1 may receive, by using, for example, an NEF, information #2 (namely, an example of second indication information) sent by an AF (denoted as an AF #1). The AF #1 may be an AF that provides a service #1 for the terminal device #1.

The service #1 needs to use TSN GM #1-based time synchronization, or a service #1 requirement on time synchronization precision is to provide time synchronization precision for the TSN GM #1. In addition, the service #1 may be a service that the terminal device #1 needs to access.

That is, in this application, the information #2 may request to activate time synchronization processing of the terminal device #1 for the TSN GM #1.

In other words, the information #2 may requests to enable a time synchronization capability of the terminal device #1 for the TSN GM #1.

In other words, the information #2 may request the terminal device #1 to enter an activated state of the TSN GM #1 (or time synchronization processing of the TSN GM #1).

In other words, the information #2 may request the terminal device #1 to switch the TSN GM #1 (or time synchronization processing of the TSN GM #1) to the activated state.

Therefore, the network device #1 may determine, based on the information #2, that the terminal device #1 needs to be activated to perform the time synchronization process for the TSN GM #1.

It should be understood that the foregoing manner in which the network device #1 determines that the terminal device #1 needs to be activated to perform the time synchronization process for the TSN GM #1 is merely an example for description. This is not particularly limited in this application. For example, the network device may also sense a service that the terminal device currently needs to access, and determine, based on a service requirement on time synchronization precision, whether the terminal device needs to be activated to perform a time synchronization process for a clock source corresponding to the requirement on time synchronization precision.

Optionally, in this application, the network device #1 may further record a time synchronization status (for example, an activated state or a deactivated state) of the terminal device #1 for the TSN GM #1. For example, the network device #1 may determine a current time synchronization status of the terminal device #1 for the TSN GM #1 based on a history of an activation request or a deactivation request that is received from the AF for the TSN GM #1.

Therefore, the network device #1 may determine, based on the current time synchronization status of the terminal device #1 for the TSN GM #1 and the information #2, whether the terminal device #1 needs to be activated to perform the time synchronization process for the TSN GM #1.

For example, if the current time synchronization status of the terminal device #1 for the TSN GM #1 is deactivated, when receiving the information #2, the network device #1 may determine that the terminal device #1 needs to be activated to perform the time synchronization process for the TSN GM #1.

By way of example, and not limitation, the information #2 may include an identifier of the terminal device #1, an identifier of the TSN GM #1, and an indication identifier #2 (namely, an example of a second identifier).

Optionally, the identifier of the terminal device #1 may include a device identifier (for example, a mobile phone number, an internet protocol address, or a network temporary identifier) of the terminal device #1.

The identifier #2 may include two optional values, for example, on (on) and off (off).

When a value of the identifier #2 is on, the network device may determine that the information #2 requests to activate time synchronization processing of the terminal device #1 for the TSN GM #1.

When a value of the identifier #2 is off, the network device may determine that the information #2 requests to deactivate time synchronization processing of the terminal device #1 for the TSN GM #1.

Alternatively, the identifier #2 may have a specified format or carry a specified bit sequence #1, and the bit sequence #1 indicates that a clock source indicated by the identifier carried in the information #2 needs to be activated.

Alternatively, the identifier #2 may have a specified format or carry a specified bit sequence #2, and the bit sequence #2 indicates that a clock source indicated by the identifier carried in the information #2 needs to be deactivated.

As described above, the information #2 indicates to activate time synchronization processing of the terminal device #1 for the TSN GM #1. In this case, a value of the identifier #2 is on.

Optionally, the information #2 may further include an identifier of the AF #1.

Optionally, in S115, the network device #1 (for example, the SMF) may further establish (or configure) a quality of service flow QoS flow #1.

For example, when the network device #1 determines, based on the identifier #2, that the terminal device #1 needs to be activated to perform time synchronization for the TSN GM #1, the network device #1 triggers an establishment procedure of the QoS flow #1.

Specifically, in this application, a time synchronization packet may be transmitted between the terminal device and a device such as a UPF by using a QoS flow, that is, the QoS flow in a protocol data unit session (Protocol Data Unit Session, PDU Session) of the terminal device. For example, the network device #1 may establish the QoS flow #1 by triggering a modification procedure of the PDU session.

For example, in this application, for a terminal device, each activated and/or to-be-activated clock source may correspond to one QoS flow.

For another example, for a terminal device, each type of activated and/or to-be-activated clock source may correspond to one QoS flow.

For another example, for a terminal device, all activated and/or to-be-activated clock sources may share one QoS flow.

Therefore, in this application, when determining that time synchronization of the terminal device #1 for the TSN GM #1 needs to be activated, the network device #1 may establish a QoS flow, namely, the QoS flow #1, used for transmitting a time synchronization packet of the TSN GM #1.

A process of establishing the QoS flow in this application may be similar to a process of establishing a QoS flow in the conventional technology. To avoid repetition, detailed descriptions are omitted herein.

It should be noted that, in this application, the time synchronization packet is transmitted between the terminal device and the UPF by using the PDU session. Therefore, after the UPF receives the time synchronization packet (for example, a gPTP packet) from a PDU session, it indicates that UE that uses the PDU session completes time synchronization processing based on a clock source of the time synchronization packet. Therefore, the UPF may no longer send the gPTP packet by using the PDU session. This can reduce energy consumption of the UPF and the terminal device, and reduce signaling overheads.

In the conventional technology, there is only one TSN-dedicated PDU session between a pair of ingress and egress interfaces (it is assumed that the ingress interface is on an NW-TT of the UPF, and the egress interface is on a DS-TT of UE). The PDU session is used for transmitting both a time synchronization packet and a TSN service packet.

According to the solution provided in this application, the time synchronization packet is transmitted by using the QoS flow (for example, an existing or newly established QoS flow), and a PDU session does not need to be additionally established for synchronization practice. This complies with an architecture design idea of the conventional technology, and can be better compatible with the conventional technology, and improve practicability of this application.

Optionally, in this application, the network device #1 may further record or store a status (specifically, an activated state or a deactivated state) of the terminal device #1 for each clock source.

Therefore, the network device #1 may further determine, based on the information #2 **and** the status of the terminal device #1 for the TSN GM #1, whether to establish the QoS flow #1.

Specifically, if the status of the terminal device #1 for the TSN GM #1 is activated, and the terminal device #1 performs synchronization for the TSN GM #1, or an AF other than the AF #1 sends a request to the network device #1 to activate synchronization of the terminal device #1 for the TSN GM #1, it indicates that the network device #1 establishes the QoS flow used for transmitting the time synchronization packet of the TSN GM #1. In this case, the QoS flow #1 does not need to be established again.

In S120, the network device #1 sends information #1 (namely, an example of first indication information) to the terminal device #1. The information #1 indicates the terminal device #1 to activate the TSN GM #1, or the information #1 indicates the terminal device #1 to activate time synchronization processing for the TSN GM #1.

Specifically, after receiving the information #2 (that is, information requests to activate synchronization of the terminal device #1 for the TSN GM #1), the network device #1 may generate the information #1.

Alternatively, after receiving the information #2 (that is, the information requests to activate synchronization of the terminal device #1 for the TSN GM #1), the network device #1 may perform determining. To be specific, if the information #2 is first information that is received by the network device #1 and that requests to activate synchronization of the terminal device #1 for the TSN GM #1, the network device #1 may generate the information #1.

In addition, if the information #2 is not the first information that is received by the network device #1 and that requests to activate synchronization of the terminal device #1 for the TSN GM #1, or if synchronization of the terminal device #1 for the TSN GM #1 is already in the activated state, or before the information #2, if the network device #1 receives information that requests to activate synchronization of the terminal device #1 for the TSN GM #1, the network device #1 may not generate (or send) the information #1.

For example, in this application, the network device may indicate, by using activation indication information, the terminal device to activate or deactivate a clock source.

The information #1 carries the identifier of an indicated object (namely, the TSN GM #1).

The information #1 carries the identifier of the terminal device #1.

Optionally, the information #1 may further carry a port number of a port #1. The port #1 includes a port configured to transmit a clock packet of the TSN GM #1.

Specifically, in this application, the network device #1 may obtain and record a correspondence between each port of the terminal device #1 and each clock source, where one port is configured to transmit a clock packet of the corresponding clock source.

Therefore, the network device #1 may determine the port #1 based on the identifier of the TSN GM #1 **and** the foregoing correspondence.

Further, the terminal device may activate, based on the port number carried in the information #1, time synchronization processing of a clock source corresponding to the port.

It should be understood that the foregoing solution in which the information #1 carries the port number of the port #1 is merely an example for description. This application is not limited thereto. For example, when receiving the information #1, the terminal device #1 may activate time synchronization processing for the TSN GM #1 on all ports of the terminal device #1.

In this application, the information #1 may include an identifier #1 (namely, an example of a first identifier).

The identifier #1 may include two optional values, for example, on (on) and off (off).

In this application, on may also be referred to as an activation identifier, and off may also be referred to as a deactivation identifier.

When a value of the identifier #1 is on, the terminal device may determine that the information #1 requests to activate time synchronization processing for the TSN GM #1.

When a value of the identifier #1 is off, the terminal device may determine that the information #1 requests to deactivate time synchronization processing for the TSN GM #1.

Alternatively, in this application, on (on) and off (off) may correspond to different bits (or bit sequences).

To be specific, the information #1 may include an indication bit, and the indication bit carries the bit used for distinguishing between the activated state (that is, on) and the deactivated state (that is, off).

Therefore, the terminal device may determine, based on a bit (or a bit sequence) carried in an indication bit of the received activation indication information, whether to activate or deactivate a clock source indicated by an identifier carried in the activation indication information.

For example, if "1" indicates activation, and "0" indicates deactivation, the information #1 may be a bit "1" carried in the indication bit and carries the activation indication information that includes the identifier of the TSN GM #1.

As described above, the information #1 indicates to activate time synchronization processing for the TSN GM #1. In this case, a value of the identifier #1 is on.

Optionally, the information #1 may further include an identifier of the AF #1.

In an implementation, the network device #1 may establish the QoS flow used for transmitting the clock synchronization packet of the TSN GM #1 in step S115. Alternatively, in another implementation, after step S110, the network device #1 sends the information #1 to the terminal device #1 in step S120. After receiving the information #1, the network device #1 triggers, based on the activation identifier in the information #1, the establishment procedure of the QoS flow used for transmitting the clock synchronization packet of the TSN GM #1.

In S130, the terminal device #1 may periodically receive the time synchronization packet (denoted as a time synchronization packet #1) of the TSN GM #1 from an external device.

Specifically, the external device may be a device outside a system in which the terminal device #1 is located, for example, a sensing terminal station (time-aware end-station) of the TSN GM #1.

In S135, the terminal device #1 may process the time synchronization packet #1 based on the processing manner (namely, an example of the first processing manner) corresponding to the activated state.

It should be noted that, in this application, the time synchronization packet #1 may be an initial time synchronization packet that is of the TSN GM #1 and that is received by the terminal device #1 after the terminal device #1 receives the information #1.

### Manner a

The terminal device #1 updates information carried in the time synchronization packet #1 (for example, information carried in a field of a packet sending moment), and sends the updated time synchronization packet #1 to the external device.

### Manner b

In this application, a time synchronization packet may be transmitted between the terminal device and the device such as the UPF by using a quality of service flow (Quality of Service flow, QoS flow), that is, the QoS flow in the protocol data unit session (Protocol Data Unit Session, PDU Session) of the terminal device.

For example, in this application, for the terminal device, each activated and/or to-be-activated clock source may correspond to one QoS flow.

For another example, for the terminal device, each type of activated and/or to-be-activated clock source may correspond to one QoS flow.

For another example, for the terminal device, all activated and/or to-be-activated clock sources may share one QoS flow.

Therefore, in this application, the terminal device #1 may establish the QoS flow #1 used for transmitting the time synchronization packet of the TSN GM #1.

It should be understood that the process of establishing the QoS flow #1 in this application may be performed under control of the SMF. In addition, the process of establishing the QoS flow in this application may be similar to the process of establishing the QoS flow in the conventional technology. To avoid repetition, detailed descriptions are omitted herein.

The foregoing describes a manner of processing a time packet by using the time synchronization packet of the TSN GM as an example. However, the present invention is not limited thereto. The time synchronization packet in this application may also be any other GM.

It should be noted that the foregoing manner a and manner b may be specified by a communications system or a communications protocol. In this case, after receiving the information #1, the terminal device #1 may directly process the time synchronization packet for the TSN GM #1 in one or more of the manner a and the manner b.

Alternatively, the network device #1 may further send information #3 to the terminal device #1. The information #3 indicates the one or more of the foregoing manner a and manner b, so that the terminal device #1 may process the time synchronization packet for the TSN GM #1 in a manner indicated by the information #3.

In addition, the information #3 and the information #1 may be same information, or may be different information. This is not particularly limited in this application.

In other words, the information #3 and the information #1 may be sent synchronously or asynchronously. This is not particularly limited in this application.

Optionally, the terminal device #1 may further perform time synchronization for the TSN GM #1 after receiving the information #1.

Alternatively, the information #1 may trigger the terminal device #1 to perform time synchronization for the TSN GM #1.

In addition, in this application, the manner a and the manner b may be jointly performed. To be specific, the terminal device #1 may perform the steps in the manner a and the manner b. In addition, an execution sequence of the steps in the manner a and the manner b is not particularly limited.

FIG. 4 shows a deactivation process and a manner of processing a time synchronization packet in a deactivated state. As shown in FIG. 4, in S210, a network device #A (namely, an example of a network device) may determine that a terminal device #A (namely, an example of a terminal device) needs to be deactivated to perform a time synchronization process for a TSN GM #A (namely, an example of a first clock source).

By way of example, and not limitation, the network device #A may include an SMF.

It should be understood that the foregoing SMF is merely an example of the network device #A. This is not particularly limited in this application. For example, the network device #A may alternatively be an AMF, an access device, or the like. This is not particularly limited in this application. For ease of understanding, the following describes in detail a method for processing the time synchronization packet in this application by using the SMF as the network device #A.

In this case, the network device #A may receive, by using, for example, an NEF, information #B (that is, an example of second indication information) sent by an AF (denoted as an AF #A). The AF #A may be an AF that provides a service #A for the terminal device #A.

The service #A needs to use TSN GM #A-based time synchronization, or a service #A requirement on time synchronization precision is to provide time synchronization precision for the TSN GM #A. In addition, the service #A may be a service that the terminal device #A needs to end access.

That is, in this application, the information #B may request to deactivate time synchronization processing of the terminal device #A for the TSN GM #A.

In other words, the information #B may request to disable a time synchronization capability of the terminal device #A for the TSN GM #A.

In other words, the information #B may request the terminal device #A to enter a deactivated state of the TSN GM #A (or time synchronization processing of the TSN GM #A).

In other words, the information #B may request the terminal device #A to switch the TSN GM #A (or time synchronization processing of the TSN GM #A) to the deactivated state.

Therefore, the network device #A may determine, based on the information #B, that the terminal device #A needs to be deactivated to perform the time synchronization process for the TSN GM #A.

It should be understood that the foregoing manner in which the network device #A determines that the terminal device #A needs to be deactivated to perform the time synchronization process for the TSN GM #A is merely an example for description. This is not particularly limited in this application. For example, the network device may also sense a service that the terminal device currently needs to end access, and deactivate a clock source used for the service.

Optionally, in this application, the network device #A may further record a time synchronization status (for example, a deactivated state or a state of removing deactivation) of the terminal device #A for the TSN GM #A. For example, the network device #A may determine a current time synchronization status of the terminal device #A for the TSN GM #A based on a history of a deactivation request or a request of removing deactivation that is received from the AF for the TSN GM #A.

Therefore, the network device #A may determine, based on the current time synchronization status of the terminal device #A for the TSN GM #A and the information #B. whether the terminal device #A needs to be deactivated to perform the time synchronization process for the TSN GM #A.

For example, if the current time synchronization status of the terminal device #A for the TSN GM #A is activated, when receiving the information #B, the network device #A may determine that the terminal device #A needs to be deactivated to perform the time synchronization process for the TSN GM #A.

By way of example, and not limitation, the information #B may include an identifier of the terminal device #A, an identifier of the TSN GM #A, and an indication identifier #B (namely, an example of a second identifier).

Optionally, the identifier of the terminal device #A may include a device identifier (for example, a mobile phone number, an internet protocol address, or a network temporary identifier) of the terminal device #A.

The identifier #B may include two optional values, for example, on (on) and off (off).

When a value of the identifier #B is on, the network device may determine that the information #B requests to activate time synchronization processing of the terminal device #A for the clock source #A.

When a value of the identifier #B is off, the network device may determine that the information #B requests to deactivate time synchronization processing of the terminal device #A for the clock source #A.

Alternatively, the identifier #B may have a specified format or carry a specified bit sequence #A, and the bit sequence #A indicates that a clock source indicated by the identifier carried in the information #B needs to be activated.

Alternatively, the identifier #B may have a specified format or carry a specified bit sequence #B, and the bit sequence #B indicates that a clock source indicated by the identifier carried in the information #B needs to be deactivated.

As described above, the information #B indicates to deactivate time synchronization processing of the terminal device #A for the clock source #A. In this case, a value of the identifier #B is off.

Optionally, the information #B may further include an identifier of the AF #A.

Optionally, in S215, the network device #A (for example, the SMF) may further tear down (or release) a quality of service flow QoS flow #A.

For example, when the network device #A determines, based on the identifier #B, that the terminal device #A needs to be deactivated to perform time synchronization for the clock source #A, the network device #A triggers a teardown procedure of the QoS flow #A.

Specifically, after receiving the information #B (that is, information requests to deactivate synchronization of the terminal device #A for the TSN GM #A), the network device #A may tear down the QoS flow #A.

Alternatively, after receiving the information #B (that is, the information requests to deactivate synchronization of the terminal device #A for the TSN GM #A), the network device #A may perform determining. To be specific, if currently no AF other than the AF #A needs to provide a service for the terminal device #A based on the TSN GM #A, the network device #A may tear down the QoS flow #A.

In addition, if currently, in addition to the AF #A, there is another AF that needs to provide a service for the terminal device #A based on the TSN GM #A, the QoS flow #A may not be torn down.

Specifically, in this application, a time synchronization packet may be transmitted between the terminal device and a device such as a UPF by using a QoS flow, that is, the QoS flow in a protocol data unit session of the terminal device.

For example, in this application, for the terminal device, each activated and/or to-be-activated clock source may correspond to one QoS flow.

For another example, for the terminal device, each type of activated and/or to-be-activated clock source may correspond to one QoS flow.

For another example, for the terminal device, all activated and/or to-be-activated clock sources may share one QoS flow.

Therefore, in this application, when determining that time synchronization of the terminal device #A for the TSN GM #A needs to be deactivated, the network device #A may tear down a QoS flow, namely, the QoS flow #A, used for transmitting a time synchronization packet of the TSN GM #A.

A process of tearing down the QoS flow in this application may be similar to a process of tearing down a QoS flow in the conventional technology. To avoid repetition, detailed descriptions are omitted herein.

In S220, the network device #A sends information #A (namely, an example of first indication information) to the terminal device #A. The information #A indicates the terminal device #A to deactivate the TSN GM #A, or the information #A indicates the terminal device #A to deactivate time synchronization processing for the TSN GM #A.

Specifically, after receiving the information #B (that is, information requests to deactivate synchronization of the terminal device #A for the TSN GM #A), the network device #A may generate the information #A.

Alternatively, after receiving the information #B (that is, the information requests to deactivate synchronization of the terminal device #A for the TSN GM #A), the network device #A may perform determining. To be specific, if currently no AF other than the AF #A needs to provide a service for the terminal device #A based on the TSN GM #A, the network device #A may generate the information #A.

In addition, if currently, in addition to the AF #A, there is another AF that needs to provide a service for the terminal device #A based on the TSN GM #A, the information #A may not be generated or sent.

For example, in this application, the network device may indicate, by using deactivation indication information, the terminal device to deactivate or remove deactivation for a clock source.

The information #A may carry the identifier of an indicated object (that is, the TSN GM #A).

Optionally, the information #A may further carry a port number of a port #A. The port #A includes a port configured to transmit a clock packet of the TSN GM #A.

Specifically, in this application, the network device #A may obtain and record a correspondence between each port of the terminal device #A and each clock source, where one port is configured to transmit a clock packet of the corresponding clock source.

Therefore, the network device #A may determine the port #A based on the identifier of the TSN GM #A and the foregoing correspondence.

Further, the terminal device may activate, based on the port number carried in the information #A, time synchronization processing of a clock source corresponding to the port.

It should be understood that the foregoing solution in which the information #A carries the port number of the port #A is merely an example for description. This application is not limited thereto. For example, when receiving the information #A, the terminal device #1 may activate time synchronization processing for the TSN GM #A on all ports of the terminal device #A.

In addition, in this application, the activated state and the deactivated state may correspond to different bits (or bit sequences).

In addition, the deactivation indication information may include an indication bit, and the indication bit carries the bit used for distinguishing between the activated state and the deactivated state.

Therefore, the terminal device may determine, based on a bit (or a bit sequence) carried in an indication bit of the received deactivation indication information, whether to activate or deactivate a clock source indicated by an identifier carried in the deactivation indication information.

For example, if "1" indicates activation, and "0" indicates deactivation, the information #A may be a bit "0" carried in the indication bit and carries the deactivation indication information that includes the identifier of the TSN GM #A.

In other words, the information #A may include the identifier of the terminal device #A and the identifier of the TSN GM #A.

Optionally, the information #A may further include an identifier of the AF #A.

Optionally, the identifier of the terminal device #A may include the device identifier (for example, the mobile phone number, the internet protocol address, or the network temporary identifier) of the terminal device #A, the port number (port number) of the terminal device #A, or the like.

In S230, the terminal device #A may periodically receive the time synchronization packet (denoted as a time synchronization packet #A) of the TSN GM #A from an external device.

Specifically, the external device may be a device outside a system in which the terminal device #A is located, for example, a sensing terminal station (time-aware end-station) of the TSN GM #A.

In S235, the terminal device #A may process the time synchronization packet #A based on the processing manner (namely, an example of a second processing manner) corresponding to the deactivated state.

It should be noted that, in this application, the time synchronization packet #A may be an initial time synchronization packet that is of the TSN GM #A and that is received by the terminal device #A after the terminal device #A receives the information #A.

### Manner c

The terminal device #A may transparently transmit the time synchronization packet #A to a device such as the UPF.

In this case, the UPF may forward the received time synchronization packet #A to another terminal device in the system.

### Manner d

The terminal device #A may discard the time synchronization packet #A.

### Manner e

In this application, a time synchronization packet may be transmitted between the terminal device and the device such as the UPF by using a quality of service flow (Quality of Service flow, QoS flow), that is, the QoS flow in the protocol data unit session (Protocol Data Unit Session, PDU Session) of the terminal device.

For example, in this application, for the terminal device, each deactivated and/or to-be-deactivated clock source may correspond to one QoS flow.

For another example, for the terminal device, each type of deactivated and/or to-be-deactivated clock source may correspond to one QoS flow.

For another example, for the terminal device, all deactivated and/or to-be-deactivated clock sources may share one QoS flow.

Therefore, in this application, the terminal device #A may tear down (delete) the QoS flow #A used for transmitting the time synchronization packet of the TSN GM #A.

It should be understood that the process of tearing down the QoS flow #A in this application may be performed under control of the SMF. In addition, the process of tearing down the QoS flow in this application may be similar to a process of tearing down a QoS flow in the conventional technology. To avoid repetition, detailed descriptions are omitted herein.

The foregoing describes a manner of processing a time packet by using the time synchronization packet of the TSN GM as an example. However, the present invention is not limited thereto. The time synchronization packet in this application may also be any other GM.

It should be noted that the foregoing manner c to manner e may be specified by a communications system or a communications protocol. In this case, after receiving the information #A, the terminal device #A may directly process the time synchronization packet for the TSN GM #A in one or more manners of the manner c to the manner e.

Alternatively, the network device #A may further send information #C to the terminal device #A. The information #C indicates the one or more of the foregoing manner c to manner e, so that the terminal device #A may process the time synchronization packet for the TSN GM #A in a manner indicated by the information #C.

In addition, the information #C and the information #A may be same information, or may be different information. This is not particularly limited in this application.

In other words, the information #C and the information #A may be sent synchronously or asynchronously. This is not particularly limited in this application.

Optionally, the terminal device #1 may further stop time synchronization for the TSN GM #1 after receiving the information #A.

Alternatively, the information #1 may trigger the terminal device #1 to stop time synchronization for the TSN GM #1.

In addition, it should be noted that the terminal device #1 and the terminal device #A may be a same terminal device or different terminal devices. This is not particularly limited in this application. In addition, the TSN GM #1 and the TSN GM #A may be a same clock source, or may be different clock sources. This is not particularly limited in this application.

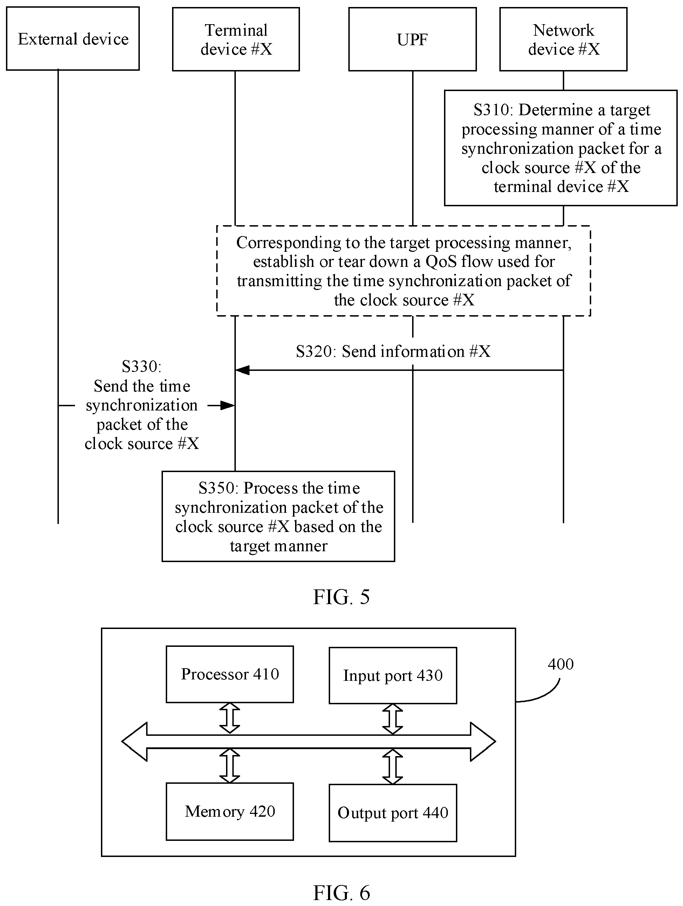

FIG. 5 shows an example of a process of processing a time synchronization packet according to this application. As shown in FIG. 5, in S310, a network device #X (namely, an example of a network device) determines a target processing manner of a time synchronization packet for a TSN GM #X (namely, an example of a first clock source) of a terminal device #X. The processing of a time synchronization packet is according to manner c).

By way of example, and not limitation, the target processing manner may include one or more of the foregoing manners a), b), d) or e).

By way of example, and not limitation, the network device #X may include an SMF.

It should be understood that the foregoing SMF is merely an example of the network device #X. This is not particularly limited in this application. For example, the network device #X may alternatively be an AMF, an access device, or the like. This is not particularly limited in this application. For ease of understanding, the following describes in detail a method for processing the time synchronization packet in this application by using the SMF as the network device #X.

The network device #X may determine the target processing manner based on whether the TSN GM #X is activated or deactivated. For example, if the TSN GM #X needs to be activated, one or more manners are selected from the foregoing manner a or manner b as the target processing manner. For another example, if the TSN GM #X needs to be deactivated, manner c) is selected as the target processing manner.

In addition, a method and a process in which the network device #X determines whether the TSN GM #X is activated or deactivated may be similar to the method and the process in which the network device #1 or the network device #A determines whether a clock source is activated or deactivated. To avoid repetition, detailed descriptions are omitted herein.

In S320, the network device #X sends information #X (namely, an example of first indication information) to the terminal device #X. The information #X indicates the target processing manner.

Optionally, the information #A may carry an identifier of the TSN GM #X.

Optionally, the information #A may carry an identifier of the terminal #X.

In S330, the terminal device #A may periodically receive the time synchronization packet (denoted as a time synchronization packet #X) of the TSN GM #X from an external device.

Specifically, the external device may be a device outside a system in which the terminal device #X is located, for example, a sensing terminal station (time-aware end-station) of the TSN GM #A.

In S335, the terminal device #X may process the time synchronization packet of the TSN GM #X based on the target processing manner. In addition, the specific process may be similar to the processing process of the terminal device #1 or the terminal device #A. To avoid repetition, detailed descriptions are omitted herein.

According to the foregoing method, FIG. 6 is a schematic diagram of an apparatus 400 for processing a time synchronization packet according to an embodiment of this application.

The apparatus 400 may be a terminal device, or may be a chip or a circuit, for example, a chip or a circuit that may be disposed in a terminal device.

The apparatus 400 may include a processing unit 410 (namely, an example of a processing unit), and optionally, may further include a storage unit 420. The storage unit 420 is configured to store instructions.

In a possible manner, the processing unit 410 is configured to execute the instruction stored in the storage unit 420, so that the apparatus 400 implements the steps performed by the terminal device in the foregoing method.

Further, the apparatus 400 may further include an input port 430 (namely, an example of a communication unit) and an output port 440 (namely, another example of a transceiver unit). Further, the processing unit 410, the storage unit 420, the input port 430, and the output port 440 may communicate with each other through an internal connection path, to transmit a control signal and/or a data signal. The storage unit 420 is configured to store a computer program. The processing unit 410 may be configured to invoke the computer program from the storage unit 420 and run the computer program, to complete the steps of the terminal device in the foregoing method. The storage unit 420 may be integrated into the processing unit 410, or may be disposed separately from the processing unit 410.

Optionally, in a possible manner, the input port 430 may be a receiver, and the output port 440 is a transmitter. The receiver and the transmitter may be a same physical entity or different physical entities. When the receiver and the transmitter are a same physical entity, the receiver and the transmitter may be collectively referred to as a transceiver.

Optionally, in a possible manner, the input port 430 is an input interface, and the output port 440 is an output interface.

In an implementation, it may be considered that functions of the input port 430 and the output port 440 are implemented by using a transceiver circuit or a dedicated transceiver chip. It may be considered that the processing unit 410 is implemented by using a dedicated processing chip, a processing circuit, a processing unit, or a general-purpose chip.

In another implementation, it may be considered that the terminal device provided in this embodiment of this application is implemented by using a general-purpose computer. To be specific, program code for implementing functions of the processing unit 410, the input port 430, and the output port 440 is stored in the storage unit 420, and a general-purpose processing unit executes the code in the storage unit 420 to implement the functions of the processing unit 410, the input port 430, and the output port 440.

In an implementation, the input port 430, namely, the transceiver unit, is for the terminal device to receive a time synchronization packet of a first clock source from an external device, and receive first indication information from a network device. The first indication information indicates the terminal device to enter a time synchronization activated state of the first clock source, or the first indication information indicates the terminal device to enter a time synchronization deactivated state of the first clock source.

The processing unit 410 is configured to process the time synchronization packet of the first clock source based on the first indication information.

Optionally, when the first indication information indicates the terminal device to enter the activated state,
the processing unit 410 is configured to update, based on the first indication information, information carried in the time synchronization packet of the first clock source, and forward the time synchronization packet of the first clock source to a user plane function UPF entity; or
the processing unit 410 is configured to establish a first quality of service flow QoS flow based on the first indication information. The first QoS flow is used for transmitting the time synchronization packet of the first clock source.

Optionally, when the first indication information indicates to enter the deactivated state,
the processing unit 410 is configured to discard the time synchronization packet of the first clock source based on the first indication information;
the processing unit 410 is configured to transparently transmit the time synchronization packet of the first clock source based on the first indication information; or
the processing unit 410 is configured to tear down the first QoS flow based on the first indication information. The first QoS flow is used for transmitting the time synchronization packet of the first clock source.

Optionally, the processing unit 410 is configured to: if the first indication information indicates to enter the activated state, perform time synchronization of the first clock source based on the first indication information.

Optionally, the processing unit 410 is configured to: if the first indication information indicates to enter the deactivated state, stop time synchronization of the first clock source based on the first indication information.

Functions and actions of the modules or units in the apparatus 400 enumerated above are merely examples for description. When the apparatus 400 is configured on or is a terminal device, the modules or units in the apparatus 400 may be configured to perform actions or processing processes performed by the terminal device (for example, the terminal device #1, the terminal device #A, or the terminal device #X) in the foregoing method. To avoid repetition, detailed descriptions are omitted herein.

For concepts, explanations, detailed descriptions, and other steps of the apparatus 400 that are related to the technical solutions provided in embodiments of this application, refer to the descriptions of the content in the foregoing methods or other embodiments. Details are not described herein again.

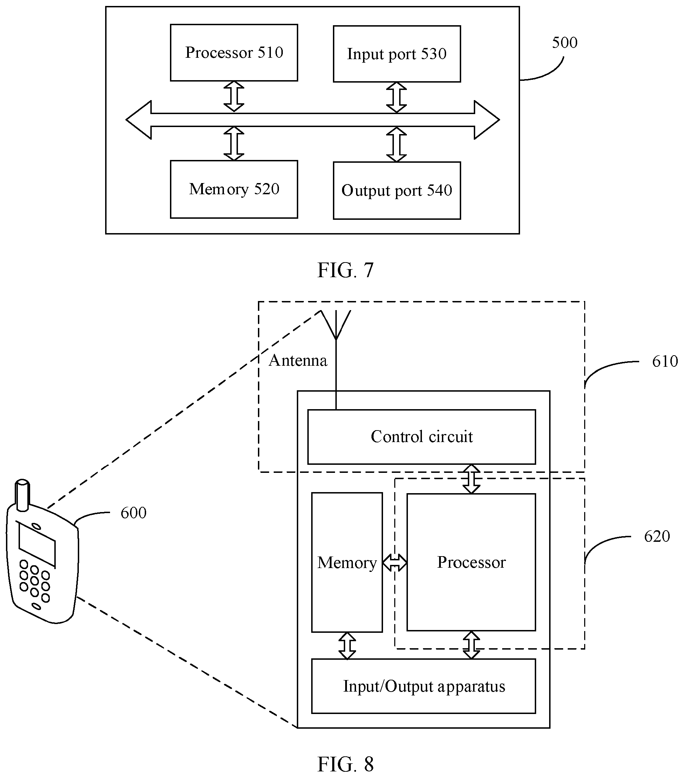

According to the foregoing method, FIG. 7 is a schematic diagram of an apparatus 500 for processing a time synchronization packet according to an embodiment of this application.

The apparatus 500 may be a network device, or may be a chip or a circuit, for example, a chip or a circuit that may be disposed in a network device.

The apparatus 500 may include a processing unit 510 (namely, an example of a processing unit), and optionally, may further include a storage unit 520. The storage unit 520 is configured to store instructions.

In a possible manner, the processing unit 510 is configured to execute the instruction stored in the storage unit 520, so that the apparatus 500 implements the steps performed by the network device in the foregoing method.

Further, the apparatus 500 may further include an input port 530 (namely, an example of a communication unit) and an output port 540 (namely, another example of a transceiver unit). Further, the processing unit 510, the storage unit 520, the input port 530, and the output port 540 may communicate with each other through an internal connection path, to transmit a control signal and/or a data signal. The storage unit 520 is configured to store a computer program. The processing unit 510 may be configured to invoke the computer program from the storage unit 520 and run the computer program, to complete the steps of the network device in the foregoing method. The storage unit 520 may be integrated into the processing unit 510, or may be disposed separately from the processing unit 510.

Optionally, in a possible manner, the input port 530 may be a receiver, and the output port 540 is a transmitter. The receiver and the transmitter may be a same physical entity or different physical entities. When the receiver and the transmitter are a same physical entity, the receiver and the transmitter may be collectively referred to as a transceiver.

Optionally, in a possible manner, the input port 530 is an input interface, and the output port 540 is an output interface.

In an implementation, it may be considered that functions of the input port 530 and the output port 540 are implemented by using a transceiver circuit or a dedicated transceiver chip. It may be considered that the processing unit 510 is implemented by using a dedicated processing chip, a processing circuit, a processing unit, or a general-purpose chip.

In another implementation, it may be considered that the network device provided in this embodiment of this application is implemented by using a general-purpose computer. To be specific, program code for implementing functions of the processing unit 510, the input port 530, and the output port 540 is stored in the storage unit 520, and a general-purpose processing unit executes the code in the storage unit 520 to implement the functions of the processing unit 510, the input port 530, and the output port 540.

In an implementation, the processing unit 510 is configured to generate first indication information. The first indication information indicates a terminal device to enter a time synchronization activated state of a first clock source, or the first indication information indicates the terminal device to enter a time synchronization deactivated state of the first clock source. The first clock source includes a clock source of an external system.

The output port 540 is configured to send the first indication information.

Optionally, the input port 530 is configured to receive second indication information. The second indication information requests to activate time synchronization of the first clock source of the terminal device, or the second indication information requests to deactivate time synchronization of the first clock source of the terminal device.

When the second indication information requests to activate time synchronization of the first clock source of the terminal device, the processing unit is further configured to establish a first QoS flow based on the second indication information. The first QoS flow is for the first terminal device to transmit the time synchronization packet of the first clock source.

When the second indication information requests to deactivate time synchronization of the first clock source of the terminal device, the processing unit is further configured to tear down the first QoS flow based on the second indication information.

Functions and actions of the modules or units in the apparatus 500 enumerated above are merely examples for description. When the apparatus 500 is configured on or is a network device, the modules or units in the apparatus 500 may be configured to perform actions or processing processes performed by the network device (for example, the network device #1, the network device #A, or the network device #X) in the foregoing method. To avoid repetition, detailed descriptions are omitted herein.

For concepts, explanations, detailed descriptions, and other steps of the apparatus 500 that are related to the technical solutions provided in this embodiment of this application, refer to descriptions about the content in the foregoing method or other embodiments. Details are not described herein again.

FIG. 8 is a schematic diagram of a structure of a terminal device 600 according to this application. The apparatus 400 may be configured in the terminal device 600, or the apparatus 400 may be the terminal device 600. In other words, the terminal device 600 may perform an action performed by the terminal device (for example, the terminal device #1, the terminal device #A, or the terminal device #X) in the foregoing method.

For ease of description, FIG. 8 shows only main components of the terminal device. As shown in FIG. 8, the terminal device 600 includes a processor, a memory, a control circuit, an antenna, and an input/output apparatus.

The processor is mainly configured to process a communications protocol and communication data, control the entire terminal device, execute a software program, and process data of the software program, for example, configured to support the terminal device in performing actions described in the foregoing embodiment of the transmission precoding matrix indication method. The memory is mainly configured to: store the software program and the data, for example, store a codebook described in the foregoing embodiment. The control circuit is mainly configured to convert a baseband signal and a radio frequency signal and process the radio frequency signal. The control circuit and the antenna together may also be referred to as a transceiver, and are mainly configured to receive and send a radio frequency signal in a form of an electromagnetic wave. The input/output apparatus, such as a touchscreen, a display, or a keyboard, is mainly configured to: receive data input by a user and output data to the user.

After the terminal device is powered on, the processor may read the software program in the storage unit, interpret and execute instructions of the software program, and process data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends, by using the antenna, a radio frequency signal in an electromagnetic wave form. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

A person skilled in the art may understand that for ease of description, FIG. 8 shows only one memory and one processor. In an actual terminal device, there may be a plurality of processors and memories. The memory may also be referred to as a storage medium, a storage device, or the like. This is not limited in embodiments of this application.

For example, the processor may include a baseband processor and a central processing unit. The baseband processor is mainly configured to process the communications protocol and the communication data. The central processing unit is mainly configured to: control the entire terminal device, execute the software program, and process the data of the software program. The processor in FIG. 8 integrates functions of the baseband processor and the central processing unit. A person skilled in the art may understand that the baseband processor and the central processing unit may alternatively be independent processors, and are interconnected by using a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may alternatively be expressed as a central processing circuit or a central processing chip. A function of processing the communications protocol and the communication data may be built in the processor, or may be stored in the storage unit in a form of a software program, and the processor executes the software program to implement a baseband processing function.

For example, in this embodiment of this application, the antenna that has receiving and transmitting functions and the control circuit may be considered as a transceiver unit 610 of the terminal device 600, and the processor that has a processing function may be considered as a processing unit 620 of the terminal device 600. As shown in FIG. 8, the terminal device 600 includes the transceiver unit 610 and the processing unit 620. The transceiver unit may also be referred to as a transceiver, a transceiver device, a transceiver apparatus, or the like. Optionally, a component that is in the transceiver unit 610 and that is configured to implement a receiving function may be considered as a receiving unit, and a component that is in the transceiver unit 610 and that is configured to implement a sending function may be considered as a sending unit. In other words, the transceiver unit includes the receiving unit and the sending unit. For example, the receiving unit may also be referred to as a receiving device, a receiver, a receiving circuit. The sending unit may be referred to as a transmitting device, a transmitter, a transmitting circuit, or the like.

According to the method provided in embodiments of this application, an embodiment of this application further provides a communications system, including one or more of the foregoing terminal devices and network devices.

It should be understood that, the processor in embodiments of this application may be a central processing unit (central processing unit, CPU), or may be another general purpose processor, a digital signal processor (digital signal processor, DSP), an application-specific integrated circuit (application specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It may be understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or a part of the foregoing embodiments may be implemented using software, hardware, firmware, or any combination thereof. When the software is used to implement the embodiments, all or a part of the foregoing embodiments may be implemented in a form of a computer program product. The computer program product includes one or more computer instructions or computer programs. When the program instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by using hardware or software depends on particular applications and design constraints of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiments, and details are not described herein again. In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or a part of the units may be selected based on actual requirements to achieve the objectives of the solutions of embodiments. In addition, function units in embodiments of this application may be integrated into one processing unit, or each of the units may exist alone physically, or two or more units may be integrated into one unit. When the functions are implemented in the form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for processing a time synchronization packet, applied to a terminal device or a chip in the terminal device, comprising:
receiving (S230) a time synchronization packet of a first clock source from an external device;
receiving (S220) first indication information from a network device, wherein the first indication information indicates the terminal device to enter a time synchronization deactivated state of the first clock source; and
processing (S235) the time synchronization packet of the first clock source based on the first indication information,
wherein the processing the time synchronization packet of the first clock source based on the first indication information comprises:
transmitting the time synchronization packet of the first clock source, without updating time information carried in the time synchronization packet, to a user plane function, UPF, entity based on the first indication information.

2. The method according to claim 1, wherein the first indication information comprises an identifier of the terminal device, an identifier of the first clock source, and a first identifier, and the first identifier indicates the deactivated state.

3. The method according to claim 2, wherein the first indication information comprises a port number of a first port, and the first port comprises a port configured to transmit the time synchronization packet of the first clock source; and/or
the first indication information comprises an identifier of a first application service entity, wherein the first application service entity is configured to provide a first service for the terminal device, and the first service is based on time synchronization of the first clock source.

4. The method according to any one of claims 1 to 3, wherein the first clock source comprises a latency sensitive network, TSN, clock source.

5. The method according to any one of claims 1 to 4, wherein the method further comprises:
if the first indication information indicates to enter the deactivated state, stopping, based on the first indication information, performing time synchronization based on the time synchronization packet of the first clock source.

6. A method for processing a time synchronization packet, comprising:
generating, by a network device, first indication information, wherein the first indication information indicates a terminal device to enter a time synchronization deactivated state of the first clock source, and the first clock source comprises a clock source of a system other than a communications system on which the terminal device currently camps, and wherein:
the first indication information indicates the terminal device to transmit the time synchronization packet of the first clock source without updating time information carried in the time synchronization packet; and
sending (S220) the first indication information.

7. The method according to claim 6, wherein the first indication information comprises an identifier of the terminal device, an identifier of the first clock source, and a first identifier, and the first identifier indicates the deactivated state.

8. The method according to claim 6 or 7, wherein the method further comprises:
receiving second indication information, wherein the second indication information requests to deactivate time synchronization of the first clock source of the terminal device; and
processing the first QoS flow based on the second indication information, wherein the first QoS flow is for the first terminal device to transmit the time synchronization packet of the first clock source.

9. The method according to claim 8, wherein the processing the first QoS flow based on the second indication information comprises:
processing the first QoS flow based on the second indication information and a status of the first clock source in the first terminal device.

10. The method according to claim 9, wherein the processing the first QoS flow based on the second indication information and a status of the first clock source in the first terminal device comprises:
if the second indication information requests to deactivate time synchronization of the first clock source of the terminal device, and an application service, AF, entity that sends the second indication information is a last AF that provides a service for the terminal device based on the first clock source, tearing down the first QoS flow.

11. The method according to any one of claims 8 to 10, wherein the second indication information comprises the identifier of the terminal device, the identifier of the first clock source, and a second identifier, and the second identifier indicates the deactivation.

12. An apparatus (400), comprising means configured to perform the method according to any one of claims 1 to 5.

13. An apparatus (500), comprising means configured to perform the method according to any one of claims 6 to 11.

14. A system, comprising the apparatus (400) according to claim 12, and the apparatus (500) according to claim 13.

## Patentansprüche

1. Verfahren zum Verarbeiten eines Zeitsynchronisationspakets, das auf eine Endgeräteeinrichtung oder einen Chip in der Endgeräteeinrichtung angewendet wird, umfassend:
Empfangen (S230) eines Zeitsynchronisationspakets einer ersten Taktquelle von einer externen Einrichtung;
Empfangen (S220) von ersten Anzeigeinformationen von einer Netzwerkeinrichtung, wobei die ersten Anzeigeinformationen der Endgeräteeinrichtung anzeigen, in einen deaktivierten Zeitsynchronisationszustand der ersten Taktquelle einzutreten; und
Verarbeiten (S235) des Zeitsynchronisationspakets der ersten Taktquelle basierend auf den ersten Anzeigeinformationen,
wobei das Verarbeiten des Zeitsynchronisationspakets der ersten Taktquelle basierend auf den ersten Anzeigeinformationen Folgendes umfasst:
Übertragen des Zeitsynchronisationspakets der ersten Taktquelle an eine Benutzerebenenfunktions-(UPF-)Einheit basierend auf den ersten Anzeigeinformationen, ohne in dem Zeitsynchronisationspaket enthaltene Zeitinformationen zu aktualisieren.

2. Verfahren nach Anspruch 1, wobei die ersten Anzeigeinformationen eine Kennung der Endgeräteeinrichtung, eine Kennung der ersten Taktquelle und eine erste Kennung umfasst und die erste Kennung den deaktivierten Zustand anzeigt.

3. Verfahren nach Anspruch 2, wobei die ersten Anzeigeinformationen eine Portnummer eines ersten Ports umfassen und der erste Port einen Port umfasst, der konfiguriert ist, um das Zeitsynchronisationspaket der ersten Taktquelle zu übertragen; und/oder
die ersten Anzeigeinformationen eine Kennung einer ersten Anwendungsdiensteinheit umfasst, wobei die erste Anwendungsdiensteinheit konfiguriert ist, um einen ersten Dienst für die Endgeräteeinrichtung bereitzustellen, und der erste Dienst auf einer Zeitsynchronisation der ersten Taktquelle basiert.

4. Verfahren nach einem der Ansprüche 1 bis 3, wobei die erste Taktquelle eine latenzempfindliche Netzwerk-(TSN-)Taktquelle umfasst.

5. Verfahren nach einem der Ansprüche 1 bis 4, wobei das Verfahren ferner Folgendes umfasst:
wenn die ersten Anzeigeinformationen anzeigen, in den deaktivierten Zustand einzutreten, auf den ersten Anzeigeinformationen basierendes Stoppen des Durchführens der Zeitsynchronisation basierend auf dem Zeitsynchronisationspaket der ersten Taktquelle.

6. Verfahren zum Verarbeiten eines Zeitsynchronisationspakets, umfassend:
Erzeugen von ersten Anzeigeinformationen durch eine Netzwerkeinrichtung, wobei die ersten Anzeigeinformationen einer Endgeräteeinrichtung anzeigen, in einen deaktivierten Zeitsynchronisationszustand der ersten Taktquelle einzutreten, und die erste Taktquelle eine Taktquelle eines anderen Systems als eines Kommunikationssystems umfasst, in dem sich die Endgeräteeinrichtung derzeit befindet, und wobei:
die ersten Anzeigeinformationen der Endgeräteeinrichtung anzeigen, das Zeitsynchronisationspaket der ersten Taktquelle zu übertragen, ohne in dem Zeitsynchronisationspaket enthaltene Zeitinformationen zu aktualisieren; und
Senden (S220) der ersten Anzeigeinformationen.

7. Verfahren nach Anspruch 6, wobei die ersten Anzeigeinformationen eine Kennung der Endgeräteeinrichtung, eine Kennung der ersten Taktquelle und eine erste Kennung umfasst und die erste Kennung den deaktivierten Zustand anzeigt.

8. Verfahren nach Anspruch 6 oder 7, wobei das Verfahren ferner Folgendes umfasst:
Empfangen von zweiten Anzeigeinformationen, wobei die zweiten Anzeigeinformationen anfordern, die Zeitsynchronisation der ersten Taktquelle der Endgeräteeinrichtung zu deaktivieren; und Verarbeiten des ersten QoS-Flusses basierend auf den zweiten Anzeigeinformationen, wobei der erste QoS-Fluss für die erste Endgeräteeinrichtung ist, um das Zeitsynchronisationspaket der ersten Taktquelle zu übertragen.

9. Verfahren nach Anspruch 8, wobei das Verarbeitung des ersten QoS-Flusses basierend auf den zweiten Anzeigeinformationen Folgendes umfasst:
Verarbeiten des ersten QoS-Flusses basierend auf den zweiten Anzeigeinformationen und einem Status der ersten Taktquelle in der ersten Endgeräteeinrichtung.

10. Verfahren nach Anspruch 9, wobei das Verarbeiten des ersten QoS-Flusses basierend auf den zweiten Anzeigeinformationen und einem Status der ersten Taktquelle in der ersten Endgeräteeinrichtung Folgendes umfasst:
wenn die zweiten Anzeigeinformationen anfordern, die Zeitsynchronisation der ersten Taktquelle der Endgeräteeinrichtung zu deaktivieren, und eine Anwendungsdienst-(AF-)Einheit, die die zweiten Anzeigeinformationen sendet, ein letzter AF ist, der einen Dienst für die Endgeräteeinrichtung basierend auf der ersten Taktquelle bereitstellt, Abbrechen des ersten QoS-Flusses.

11. Verfahren nach einem der Ansprüche 8 bis 10, wobei die zweiten Anzeigeinformationen die Kennung der Endgeräteeinrichtung, die Kennung der ersten Taktquelle und eine zweite Kennung umfassen und die zweite Kennung die Deaktivierung anzeigt.

12. Vorrichtung (400), umfassend Mittel, die konfiguriert sind, um das Verfahren nach einem der Ansprüche 1 bis 5 durchzuführen.

13. Vorrichtung (500), umfassend Mittel, die konfiguriert sind, um das Verfahren nach einem der Ansprüche 6 bis 11 durchzuführen.

14. System, umfassend die Vorrichtung (400) nach Anspruch 12 und die Vorrichtung (500) nach Anspruch 13.

## Revendications

1. Procédé de traitement d'un paquet de synchronisation temporelle, appliqué à un dispositif terminal ou à une puce dans le dispositif terminal, comprenant :
la réception (S230) d'un paquet de synchronisation temporelle d'une première source d'horloge provenant d'un dispositif externe ;
la réception (S220) de premières informations d'indication provenant d'un dispositif réseau, dans lequel les premières informations d'indication indiquent au dispositif terminal d'entrer dans un état de synchronisation temporelle désactivée de la première source d'horloge ; et
le traitement (S235) du paquet de synchronisation temporelle de la première source d'horloge sur la base des premières informations d'indication,
dans lequel le traitement du paquet de synchronisation temporelle de la première source d'horloge sur la base des premières informations d'indication, comprend :
la transmission du paquet de synchronisation temporelle de la première source d'horloge, sans mettre à jour les informations temporelles contenues dans le paquet de synchronisation temporelle, à une entité de fonction de plan utilisateur, UPF, sur la base des premières informations d'indication.

2. Procédé selon la revendication 1, dans lequel les premières informations d'indication comprennent un identifiant du dispositif terminal, un identifiant de la première source d'horloge et un premier identifiant, et le premier identifiant indique l'état désactivé.

3. Procédé selon la revendication 2, dans lequel les premières informations d'indication comprennent un numéro de port d'un premier port, et le premier port comprend un port configuré pour transmettre le paquet de synchronisation temporelle de la première source d'horloge ; et/ou
les premières informations d'indication comprennent un identifiant d'une première entité de service d'application, dans lequel la première entité de service d'application est configurée pour fournir un premier service pour le dispositif terminal, et le premier service est basé sur la synchronisation temporelle de la première source d'horloge.

4. Procédé selon l'une quelconque des revendications 1 à 3, dans lequel la première source d'horloge comprend une source d'horloge de réseau sensible à la latence, TSN.

5. Procédé selon l'une quelconque des revendications 1 à 4, dans lequel le procédé comprend également :
si les premières informations d'indication indiquent d'entrer dans l'état désactivé, l'arrêt, sur la base des premières informations d'indication, de la réalisation d'une synchronisation temporelle sur la base du paquet de synchronisation temporelle de la première source d'horloge.

6. Procédé de traitement d'un paquet de synchronisation temporelle, comprenant :
la génération, par un dispositif réseau, de premières informations d'indication, dans lequel les premières informations d'indication indiquent à un dispositif terminal d'entrer dans un état de synchronisation temporelle désactivée de la première source d'horloge, et la première source d'horloge comprend une source d'horloge d'un système autre qu'un système de communication sur lequel se trouve actuellement le dispositif terminal, et dans lequel :
les premières informations d'indication indiquent au dispositif terminal de transmettre le paquet de synchronisation temporelle de la première source d'horloge sans mettre à jour les informations temporelles contenues dans le paquet de synchronisation temporelle ; et
l'envoi (S220) des premières informations d'indication.

7. Procédé selon la revendication 6, dans lequel les premières informations d'indication comprennent un identifiant du dispositif terminal, un identifiant de la première source d'horloge et un premier identifiant, et le premier identifiant indique l'état désactivé.

8. Procédé selon la revendication 6 ou 7, dans lequel le procédé comprend également :
la réception de secondes informations d'indication, dans lequel les secondes informations d'indication demandent la désactivation de la synchronisation temporelle de la première source d'horloge du dispositif terminal ; et
le traitement du premier flux QoS sur la base des secondes informations d'indication, dans lequel le premier flux QoS est utilisé pour que le premier dispositif terminal transmette le paquet de synchronisation temporelle de la première source d'horloge.

9. Procédé selon la revendication 8, dans lequel le traitement du premier flux QoS sur la base des secondes informations d'indication comprend :
le traitement du premier flux QoS sur la base des secondes informations d'indication et d'un état de la première source d'horloge dans le premier dispositif terminal.

10. Procédé selon la revendication 9, dans lequel le traitement du premier flux QoS sur la base des secondes informations d'indication et d'un état de la première source d'horloge dans le premier dispositif terminal comprend :
si les secondes informations d'indication demandent la désactivation de la synchronisation temporelle de la première source d'horloge du dispositif terminal, et qu'une entité de service d'application, AF, qui envoie les secondes informations d'indication est un dernier AF qui fournit un service pour le dispositif terminal sur la base de la première source d'horloge, la suppression du premier flux QoS.

11. Procédé selon l'une quelconque des revendications 8 à 10, dans lequel les secondes informations d'indication comprennent l'identifiant du dispositif terminal, l'identifiant de la première source d'horloge et un second identifiant, et le second identifiant indique la désactivation.

12. Appareil (400) comprenant un moyen configuré pour réaliser le procédé selon l'une quelconque des revendications 1 à 5.

13. Appareil (500) comprenant un moyen configuré pour réaliser le procédé selon l'une quelconque des revendications 6 à 11.

14. Système comprenant l'appareil (400) selon la revendication 12 et l'appareil (500) selon la revendication 13.
